# EUROPEAN PATENT APPLICATION

(11) **EP 4 764 843 A1**
(43) Date of publication of application: **24.06.2026**
(21) Application number: 25214937.2
(22) Date of filing: 11.11.2025
(51) Int. Cl.: G06F 9/30, G06F 12/14

(54) **SELECTIVELY CONTROLLABLE MEMORY TAG CHECKING**

(30) Priority: 11.12.2024 US 202463730738 P; 28.06.2025 US 202519253814
(71) Applicant: INTEL Corporation, Santa Clara, CA 95054 (US)
(72) Inventor: LeMay, Michael, Hillsboro, 97123 (US); Cihula, Joseph, Hillsboro, 97124 (US); Nuzman, Joseph, 34381 Haifa (IL); Brandt, Jason W., Austin, 78746 (US); Anati, Ittai, 4723939 Ramat Hasharon (IL); Neiger, Gilbert, Portland, 97212 (US); Agron, Jason, San Jose, 95112 (US); Durham, David M., Beaverton, 97007 (US)
(74) Representative: Goddar, Heinz J.

(57) **Abstract**

Techniques for memory tag checking are described. In an embodiment, an apparatus includes instruction decoder circuitry to decode a first instruction, the first instruction to reference a memory location via a tagged pointer; and execution circuitry coupled to the instruction decoder circuitry, the execution circuitry to perform one or more memory tag checking operations in response to the first instruction. The one or more memory tag check operations include referencing an entry location to find a first tag value and comparing the first tag value to a second tag value provided by the tagged pointer. The entry location is to be in a first subregion of a memory region to be reserved for a tag table. The first subregion is to be in a first set of subregions of the memory region. The first set is to include only subregions committed to tag storage. The memory region to be reserved for the tag table is also to include a second set of subregions. The second set is to include only subregions uncommitted to tag storage.

## Description

### BACKGROUND

Computers and other information processing systems may store confidential, private, and secret information in their memories. Software may have vulnerabilities that may be exploitable to steal such information. Data corruption is also a risk. Hardware may also have vulnerabilities that may be exploited and/or adversaries may physically modify a system to steal information. Therefore, memory safety and security are important concerns in computer system architecture and design.

A processor in an information processing system may execute software programs based on a limited set of instructions available to be executed by the processor, defined by the instruction set architecture (ISA) of the processor. An instruction within an ISA may be referred to as a macro-instruction, in contrast with a micro-instruction, micro-operation (uop), etc. that results from the processor's decoding of a macro-instruction.

An existing (or non-extended) ISA may be extended with new instructions for a new generation of a processor, to support new features, etc., to create an extended ISA (e.g., including instructions from the existing ISA plus the new instructions) that is backward compatible with the existing ISA. To accommodate this possibility, an existing ISA may have been defined to include one or more opcodes that are not executed by processors designed to support the existing ISA but not the extended ISA. Within the existing ISA, these opcodes and/or corresponding instructions may be referred to as no-operation instructions or no-ops (NOPs) because no operation is performed in response to decoding of these opcodes by such a processor. However, one or more NOPs may be redefined within the extended ISA as new instructions that will be executed by processors designed to support the extended ISA.

### BRIEF DESCRIPTION OF DRAWINGS

Various examples in accordance with the present disclosure will be described with reference to the drawings, in which:
FIG. 1A illustrates an example of a processor for efficient tag checking for dynamically repeating memory accesses according to embodiments.
FIG. 1B shows details of examples of memory tag checking instructions according to embodiments.
FIG. 1C shows examples of helper functions for memory tag checking instructions according to embodiments.
FIG. 2A illustrates a block diagram according to embodiments, including an enhanced compiler to instrument source code with instructions to check memory accesses.
FIG. 2B illustrates an example of a pointer format according to embodiments.
FIG. 2C illustrates an example of looking up a tag in a tag table according to embodiments.
FIG. 2D illustrates an example tag table layout for an example based on 4KB linear data pages according to embodiments.
Figures 3A and 3B illustrate examples of tag table base registers according to embodiments.
Figures 3C and 3D illustrate examples of configurable positioning of tag tables according to embodiments.
FIG. 3E illustrates an example of a register including an overall feature enable bit according to embodiments.
FIG. 3F illustrates an example of formulae defining the effects of feature enable bits according to embodiments.
Figures 3G and 3H illustrate examples of error code registers according to embodiments.
Figures 3I and 3J illustrate examples of instrumentation for instruction configuration according to embodiments.
FIG. 3K illustrates example encodings for new instructions according to embodiments.
FIG. 3L illustrates a method for using prefix bits to distinguish between loads and stores according to embodiments.
Figures 3M and 3N illustrate examples of feature enable logic according to embodiments.
FIG. 4 illustrates an example computing system according to an embodiment.
FIG. 5 illustrates a block diagram of an example processor and/or System on a Chip (SoC) that may have one or more cores and an integrated memory controller according to an embodiment.
FIG. 6A is a block diagram illustrating both an example in-order pipeline and an example register renaming, out-of-order issue/execution pipeline according to an embodiment.
FIG. 6B is a block diagram illustrating both an example in-order architecture core and an example register renaming, out-of-order issue/execution architecture core to be included in a processor according to an embodiment.
FIG. 7 illustrates examples of execution unit(s) circuitry according to an embodiment.
FIG. 8 illustrates the use of a software instruction converter to convert binary instructions in a source instruction set architecture to binary instructions in a target instruction set architecture according to an embodiment.

### DETAILED DESCRIPTION

The present disclosure relates to methods, apparatus, systems, and non-transitory computer-readable storage media for selectively controllable memory tag checking. According to some examples, an apparatus includes instruction decoder circuitry to decode a first instruction, the first instruction to reference a memory location via a tagged pointer; and execution circuitry coupled to the instruction decoder circuitry, the execution circuitry to perform one or more memory tag checking operations in response to the first instruction. The one or more memory tag check operations include referencing an entry location to find a first tag value and comparing the first tag value to a second tag value provided by the tagged pointer. The entry location is to be in a first subregion of a memory region to be reserved for a tag table. The first subregion is to be in a first set of subregions of the memory region. The first set is to include only subregions committed to tag storage. The memory region to be reserved for the tag table is also to include a second set of subregions. The second set is to include only subregions uncommitted to tag storage.

As mentioned in the background section, memory safety and security are important concerns in computer system architecture and design. Some approaches to providing memory safety (e.g., ARM Memory Tagging Extension (MTE)), any of which may be referred to as memory tagging, memory tag checking, tag checking, etc., involve associating (e.g., to indicate ownership) a first tag (or other metadata) with a memory location (e.g., by storing the first tag in the memory location alongside data, by storing the first tag in a table or other data structure indexed by an address of the memory location); comparing, to the first tag, a second tag (or other metadata) in an address pointer to the memory location in connection with an attempted access to the memory location; and allowing access to the memory location only if the second tag matches the first tag.

Existing approaches may impose excessive memory and/or performance overheads, for example, by requiring reserving physical memory in advance and/or not allowing opting in to checks on specific accesses. Therefore, the use of embodiments may be desirable because it may provide an opt-in, pay-as-you-go model of memory tag checking more flexible and/or more efficient than existing approaches. In embodiments, instrumentation may be embedded within a binary program using a combination of instructions, prefixes, and/or prefix bits to selectively control tag checking. This opt-in model allows optimizing compilers and memory-safe language compilers to elide unneeded and undesired checks (e.g., accesses statically known to point to untagged regions (stack variables and global variables, accesses statically proved safe by the compiler, redundant checks, etc.). Optimizing compilers may also coalesce checking for multiple memory accesses into a smaller number of tag check instruction(s). Other benefits may include allowing the use of a streamlined instruction set to reduce implementation complexity and avoiding specialized additions outside the core, which avoids wasted silicon area for non-tagged usages.

Embodiments may include a selectively controllable memory tag checking mechanism or architecture that may be referred to as ChkTag (pronounced 'Check Tag'), or simply as 'a feature' or 'the feature' for convenience, but the use of the term ChkTag in this description is for example only and does not limit embodiments to mechanisms, architectures, etc. referred to as ChkTag. Embodiments, including ChkTag, may provide a mechanism to detect memory safety programming errors, such as buffer overflows and use-after-free, utilizing instructions, prefixes, and/or prefix bits inserted by compilers preceding memory accesses (e.g., potentially unsafe memory accesses).

In embodiments, embodiments may be used to provide the following:
- Find out of bounds and use after free (UAF) bugs in deployed software.
- Apply to software with reasonable enabling effort and a single binary.
- Support protecting any data regions.
- Limit false positives (software should not fail if it has no "bugs").

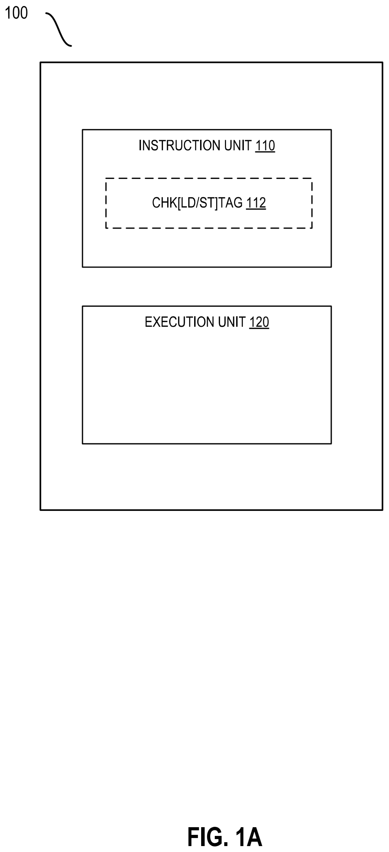

Figure 1A illustrates a simplified view of a processor 100 for memory tagging according to embodiments. Processor 100 may represent a hardware processor, processor core, execution core, core, etc., any of which may be referred to as a processor, core, etc., and/or all or part of a hardware component including one or more processors, cores, etc. integrated on a single substrate or packaged within a single package, each of which may include multiple execution threads and/or multiple execution cores, in any combination. Each processor represented as or in processor 100 may be any type of processor, including a general-purpose microprocessor, such as a processor in the Intel^{®} Core^{®} Processor Family or other processor family from Intel^{®} Corporation or another company, a special purpose processor or microcontroller, or any other device or component in an information processing system in which an embodiment may be implemented. Processor 100 may be architected and designed to operate according to any ISA, with or without being controlled by microcode. For convenience and/or examples, some features (e.g., instructions, registers, ISA extensions, etc.) may be referred to by a name associated with a specific processor architecture (e.g., x86, Intel^{®} 64, IA32, linear address masking (LAM)), but embodiments are not limited to those features, names, architectures, etc.

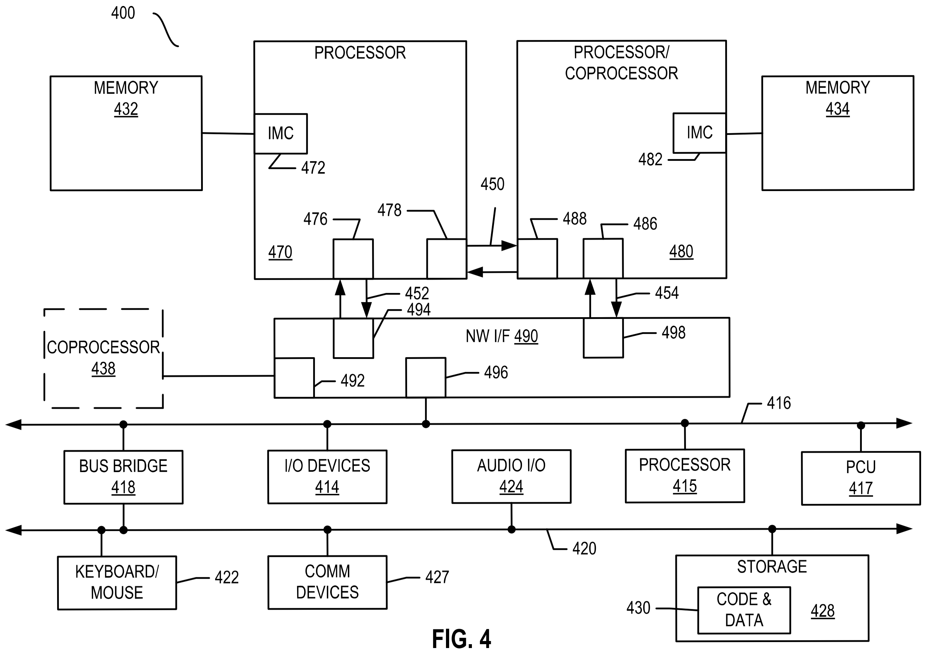

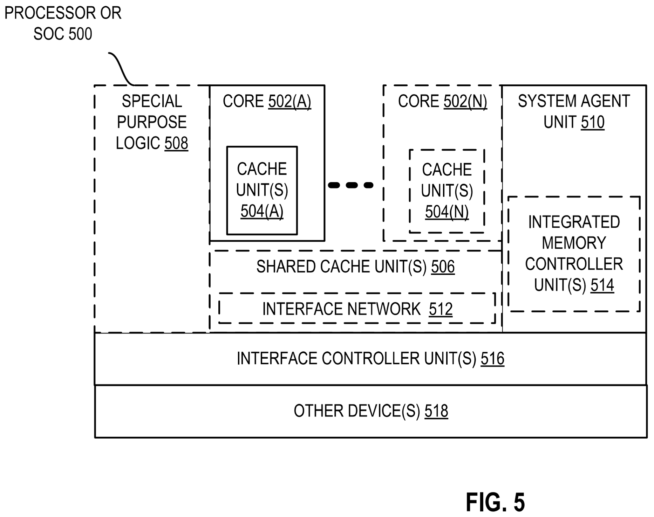

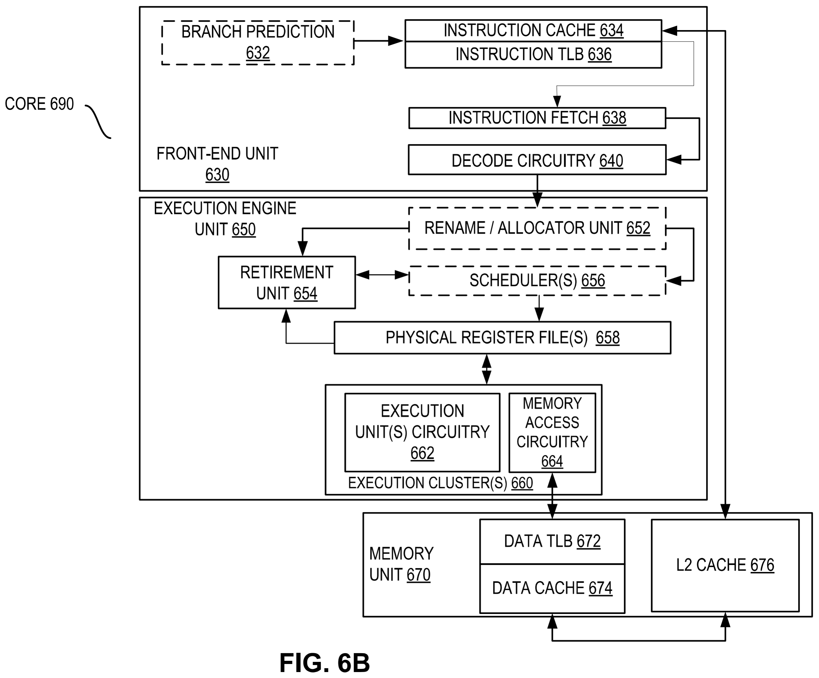

Processor 100 may be implemented in logic gates and/or any other type of circuitry, all, or parts of which may be included in a discrete component and/or integrated into the circuitry of a processing device or any other apparatus in a computer or other information processing system. For example, processor 100 in Figure 1A may correspond to and/or be implemented/included in any of processors 470, 480, or 415 in Figure 4, processor 500 or one of cores 502A to 502N in Figure 5, and/or core 690 in Figure 6B, each as described below.

As shown, processor 100 includes instruction unit 110 and execution unit 120. Processor 100 may include any number of each of these elements (e.g., multiple execution units) and/or any other elements not shown in Figure 1A.

Instruction unit 110 may correspond to and/or be implemented/included in front-end unit 630 in Figure 6B, as described below, and/or may include any combination of circuitry, logic gates, programmable logic array(s), look-up table(s), structures, hardware, etc., such as an instruction decoder (e.g., decode circuitry 640 in Figure 6B), to fetch, receive, decode, interpret, schedule, and/or handle instructions, such as a memory tagging instruction 112 (e.g., CHKLDTAG, CHKSTTAG, another explicit ChkTag instruction, a ChkTag prefixed data access instruction (e.g., MOV, MOVD, MOVQ, MOVSD, MOVSS, MOVSX, MOVSXD, MOVZX, VMOVD, VMOVQ, VMOVSD, VMOVSS, etc.), as described below) to be executed by processor 100. In Figure 1A, an instruction that may be decoded or otherwise handled by instruction unit 110 is represented as a block with a broken line border because the instruction is not itself hardware, but instruction unit 110 may include hardware or logic capable of decoding or otherwise handling the instruction.

Although some embodiments may be described using specific instructions and/or instruction formats, any instruction format may be used in embodiments; for example, an instruction may include an opcode and one or more operands, where the opcode may be decoded into one or more micro-instructions or micro-operations for execution by execution unit 120. Operands or other parameters may be associated with an instruction implicitly, directly, indirectly, or according to any other approach.

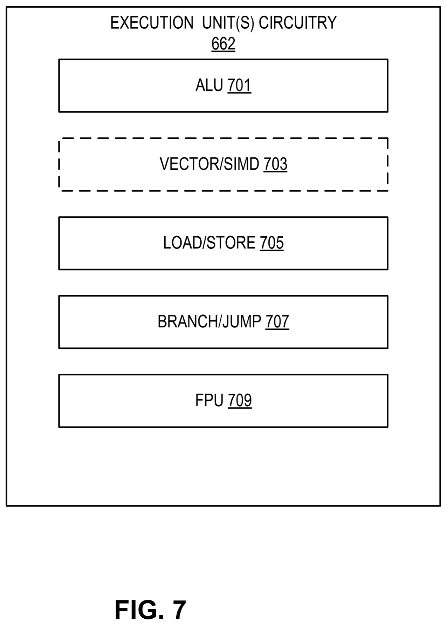

Execution unit 120 may represent an execution unit implemented in any combination of circuitry, hardware, arithmetic-logic units, load-store units, etc., coupled to instruction unit 110, to perform operations in response to decoded instructions generated by the instruction unit 110 (e.g., micro-instructions, uops, control signals, etc.), such as any combination of execution engine unit 650, execution cluster(s) 660, execution unit(s) circuitry 662, and/or memory access circuitry 664 in Figure 6B and/or Figure 7, described below.

Embodiments may include associating tags with granules of memory and checking that the corresponding tag value is present in the pointer used to access the memory. If the tag in a pointer and the tag associated with the memory location do not match, an exception is generated.

In embodiments, explicit tag checking instructions (e.g., ChkTag instructions including CHKLDTAG and CHKSTTAG) and/or ChkTag prefixed instructions may be inserted by compilers before potentially unsafe memory accesses to detect memory safety programming errors, such as buffer overflows and use-after-free. Alternatively, tags may be checked implicitly for some or all memory accesses.

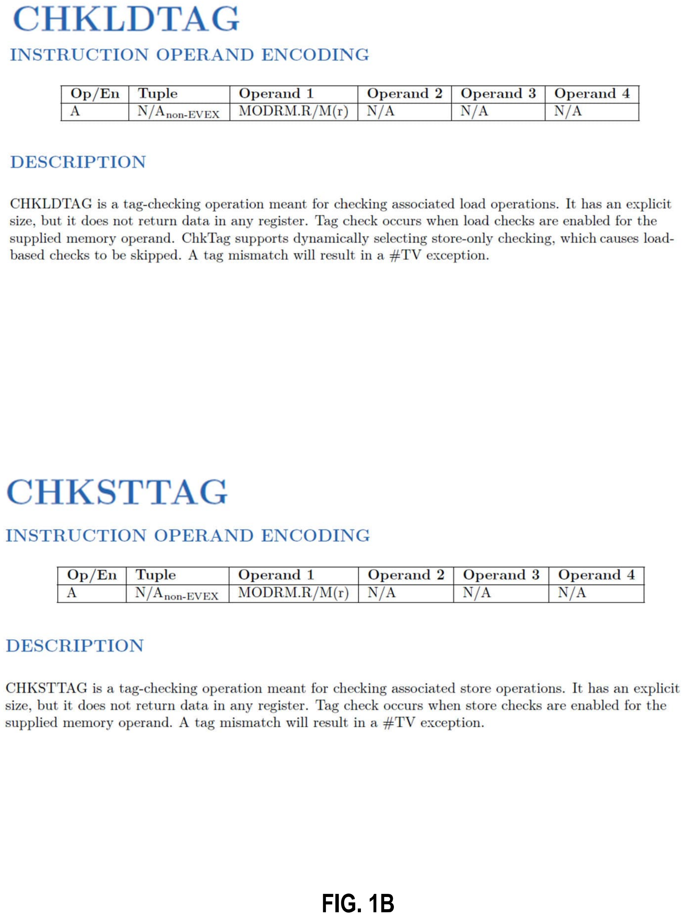

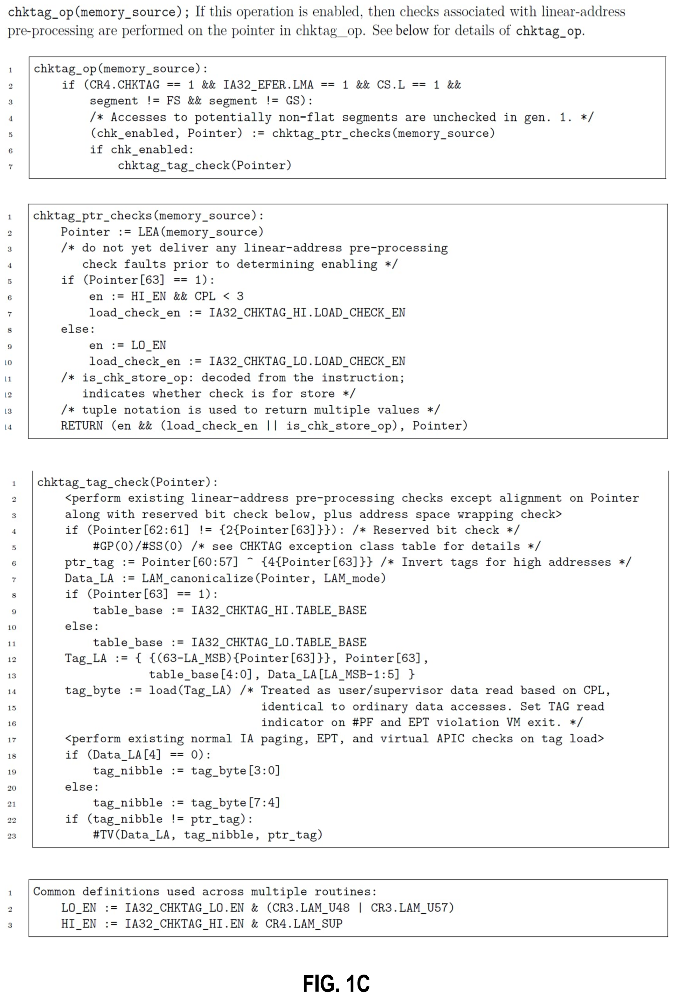

Figure 1B shows details of examples of CHKLDTAG and CHKSTTAG instructions according to embodiments. Figure 1C shows examples of helper functions for these and other ChkTag instructions according to embodiments.

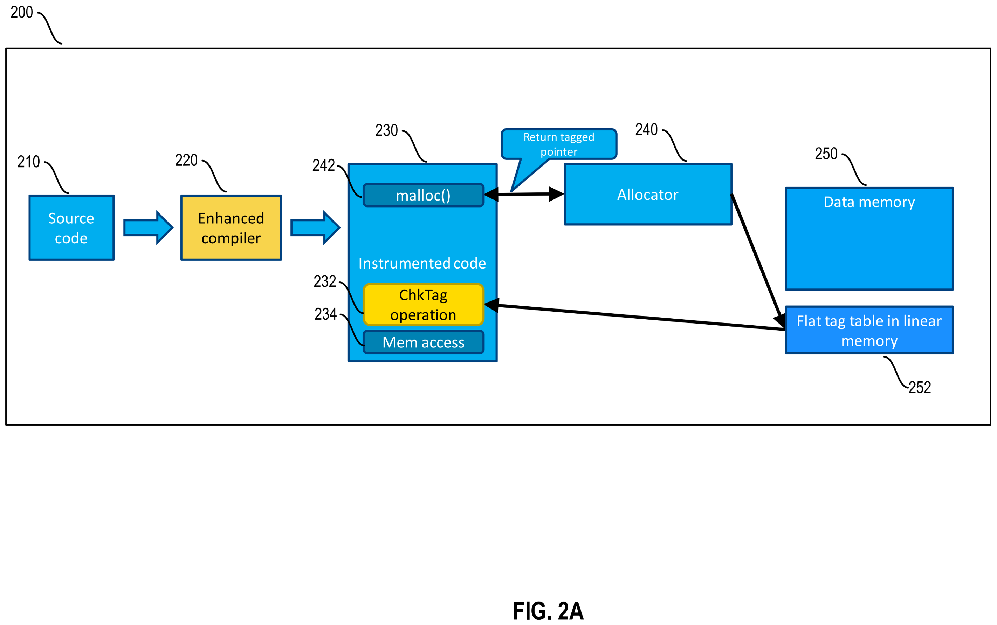

Figure 2A illustrates a block diagram 200 according to an embodiment, including an enhanced compiler 220 to instrument source code 210 with instructions to check memory accesses (e.g., explicit ChkTag instructions or instructions with ChkTag prefixes), as well as memory allocator 240 to allocate (e.g., in response to malloc instruction 242) one or more portions of a memory (e.g., data memory 250) to a program, application, or other software. A memory allocator (e.g., allocator 240) may be implemented within system software (however, embodiments are not limited to software implementations of a memory allocator). In the resulting instrumented code 230, each memory access (e.g., memory access 234) is preceded by a ChkTag operation (e.g., ChkTag operation 232, which may be performed in response to a ChkTag instruction inserted before a memory access instruction or in response to a ChkTag prefixed instruction), in which a tag in a pointer associated with the memory access operation is compared to a stored tag (e.g., in flat tag table 252 in linear memory) associated with the corresponding memory location.

In embodiments, a ChkTag instruction may specify an access range within which tags in pointers are to be compared to tags associated with the corresponding memory locations. The access range may be specified by encoding both a memory operand for the base address and a data access size into the instruction. In other embodiments, the access range may be specified by a memory operand in the ChkTag instruction (e.g., the base register specifies the first byte of the access range and the effective address specifies the last byte of the access range). Some embodiments may incorporate segmentation support for computing the access range.

The following terms may be used in descriptions of embodiments. Definitions are given as examples, without limiting embodiments to these definitions (e.g., pointers may be other sizes instead of 64 bits, LA_MSB or other bit positions may differ, etc.). Likewise, any other references, in this description or corresponding figures, to bit positions or bit lengths in values, registers, tags, etc. are given as examples and do not limit embodiments to that which is referenced.
- ChkTag prefix: A prefix or bit setting that can be applied to a subset of instruction types that access memory to indicate that a ChkTag tag check may be needed, subject to ChkTag enabling.
- Data-LA: Linear address of a memory access as used for paging. The resulting address excludes the pointer tag bits.
- LA_MSB: Index of most-significant linear address bit, from paging mode, not LAM mode: 56 for LA57, 47 for LA48.
- Pointer: 64-bit value generated by address computation, containing the tag and the address.
- Tag check: Comparison of pointer tag with corresponding tag(s) loaded from memory. Triggered by an CHKLDTAG or CHKSTTAG instruction or a ChkTag prefix, if enabled. Associated linear-address pre-processing checks, address space wrapping check, and reserved bit checks may also be performed.
- Tag-LA: Linear address used by the CPU to access an entry in the tag table during the tag check.

Examples of features that may be in included in a system architecture (e.g., ChkTag) according to embodiments:
- CHKLDTAG and CHKSTTAG instructions that accept arbitrary memory operands and specify the sizes of data accesses. Compilers and assemblers can use these to check arbitrary data accesses.
- Prefix bit or byte for certain MOV-type instructions to generate ChkTag operations with reduced code size overhead compared to CHKLDTAG and CHKSTTAG instructions.
- Separate tag table in linear memory for each half of the linear address space. Software configures tag table locations using new model-specific registers (MSRs). The size of the linear address reservation for each tag table is 1/32^{nd} the size of each half of the linear address space covered by the table. The linear address space size is determined by the paging mode. Pages in the tag table linear range can initially be uncommitted. The set of committed tag table pages can be enlarged on demand as tags are initialized for additional data pages to provide a pay-as-you-go model. An alternative is to narrow the checked ranges of the linear address space, which would result in a corresponding reduction in the tag table linear reservation. It would also be possible to define more than two checked address ranges.
- Tagging is at 16-byte granularity with a 4-bit tag size. Other granularities and tag sizes are possible.
- Tags can be read/written with all existing types of load/store instructions. This permits optimized tag table accesses. For example, allocators can limit use of locked tag update operations to just the places where they are actually necessary. Allocators can also use single instruction multiple data (SIMD) instructions for performing bulk tag updates. Large memory operations, e.g., in string and memory library routines, can perform SIMD loads and checks directly on tag memory using existing instruction types.
- Precise mismatch detection, even for stores.
- Controls in new MSRs to allow software to dynamically select checking modes (e.g., off (e.g., for minimal overhead), load and store (e.g., for maximum security coverage), and store-only (e.g., for intermediate overhead) separately for each half of the linear address space. Overheads may scale with the extent of tagging. For example, processes with a variety of configurations may exist atop a shared kernel (which may itself be tagged or untagged and instrumented or uninstrumented, with dynamically configurable modes for load and store, store-only, or disabled checks if tagged): 1) tagged process with load and store checks, 2) tagged process with store-only checks, 3) instrumented process with tagging disabled (e.g., minimal overhead, just from additional instructions treated as NOPs and ignored prefixes), and 4) uninstrumented process (zero overhead from ChkTag).
- Other types of metadata in addition to tags could potentially be encoded into pointers and/or stored in metadata tables, such as single- or double-ended bounds, version, permission bits, a compartment identifier (ID), privilege level, accessed and/or dirty bits, identifier for code authorized to access the data such as a hash value, key, KeyID, tweak value or integrity value (IV) or counter value used by the processor circuitry to encrypt/decrypt data and/or other metadata, an aggregate cryptographic message authentication code (MAC) value, Integrity-Check Value (ICV), or error-correcting code (ECC) value for the data allocation, element size, e.g., to allow generating an error if an attempt is made to access an allocation at an offset that is not an even multiple of the element size, and data object size, e.g., to permit generating an exception when accessing invalid locations outside of the data object, even if the space reserved for the allocation is larger than the size needed for the data object.

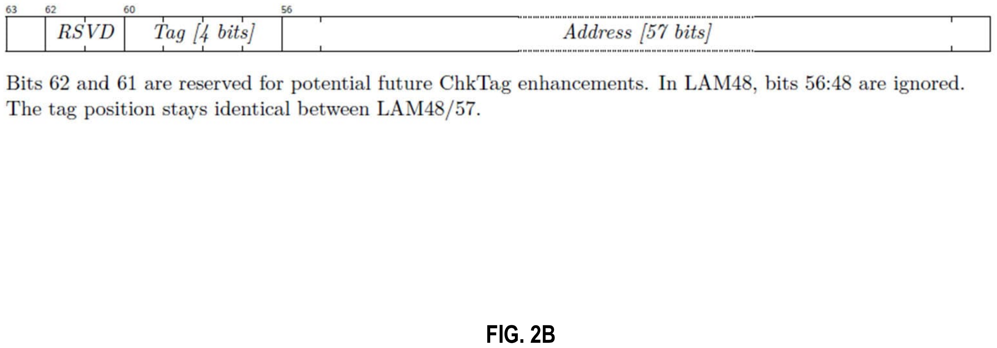

An example of a pointer format is illustrated in Figure 2B.

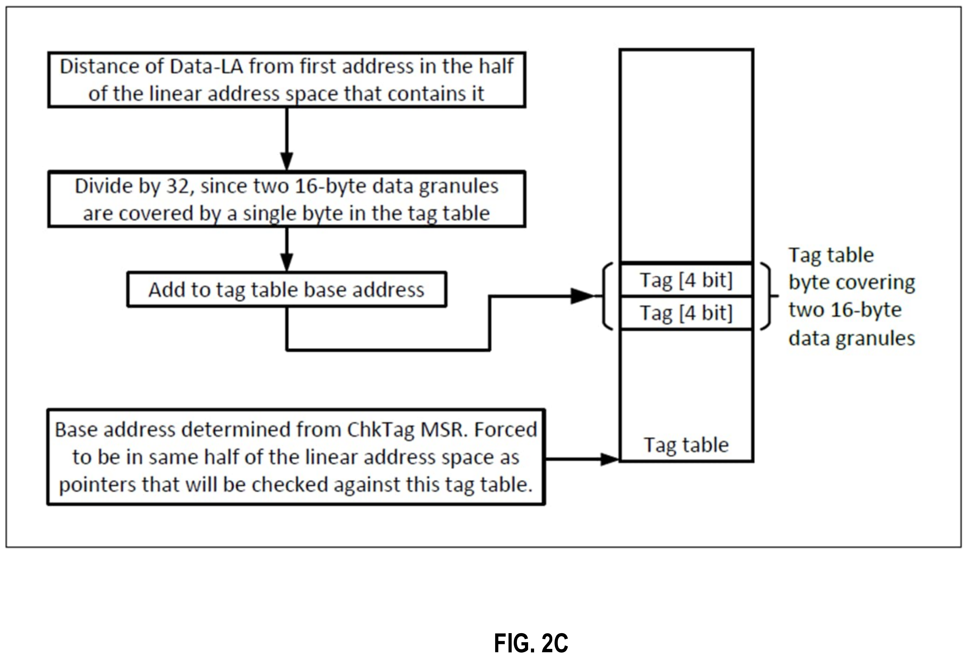

Figure 2C illustrates an example of looking up a tag in a tag table. In embodiments, each tag covers a 16-byte naturally aligned granule of memory. The tag for a given access attempt may be located by first dividing by 32 the distance of the linear address for the data from the first address in the half of the linear address space that contains it. The reason for dividing by 32 rather than the granule size of 16 bytes is that a single tag table byte contains two tags. Second, that scaled address is added to the base address for the tag table to generate the final linear address for the tag byte. Tag table base addresses may be specified as described below.

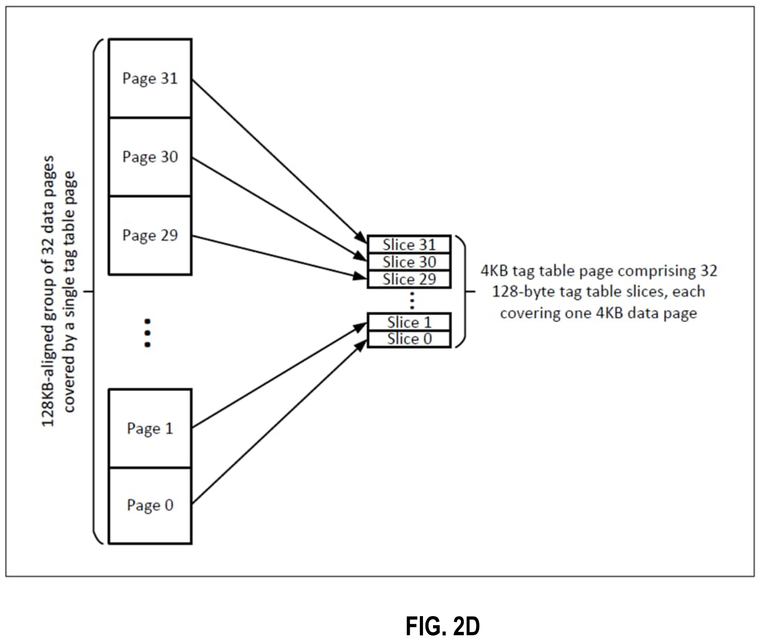

Figure 2D illustrates an example tag table layout for an example based on 4KB linear data pages (e.g., tag table coverage of data pages). To check an access, the tag for each granule to be accessed is loaded from the tag table and compared to the tag in the pointer. If any of the loaded tags does not match the tag in the pointer, an exception is generated. In embodiments, the feature (e.g., ChkTag) may introduce a new architectural exception type, (e.g., TaggingViolation, #TV), for tagging violation conditions.

In embodiments, ChkTag may only be supported in 64-bit mode (e.g., IA32_EFER.LMA & CS.L == 1), with CPUID (processor identification) enumeration in extended features (e.g., CPUID.(0x7.0x1).ECX[6] (EAX=07H, ECX=01H → ECX[6] = 1b)).

In embodiments, tag loads may adhere to the ordinary memory ordering model for a load, with no fencing needed. In embodiments, a ChkTag-prefixed instruction performs a tag load followed by a Data-LA (data linear address) access. The tag load may be repeated due to a fault occurring later in the instruction leading to software re-executing the instruction from its beginning. Furthermore, tag loads may be repeated even without a fault occurring. However, ChkTag prefixing may avoid introducing any new instances of repeated Data-LA accesses in embodiments where tag loads and checks are ordered ahead of Data-LA accesses. Software may avoid performing tag loads from uncacheable (UC) memory where side effects may occur due to memory mapped input/output (MMIO). Other embodiments may order tag loads and checks in other ways with respect to Data-LA accesses.

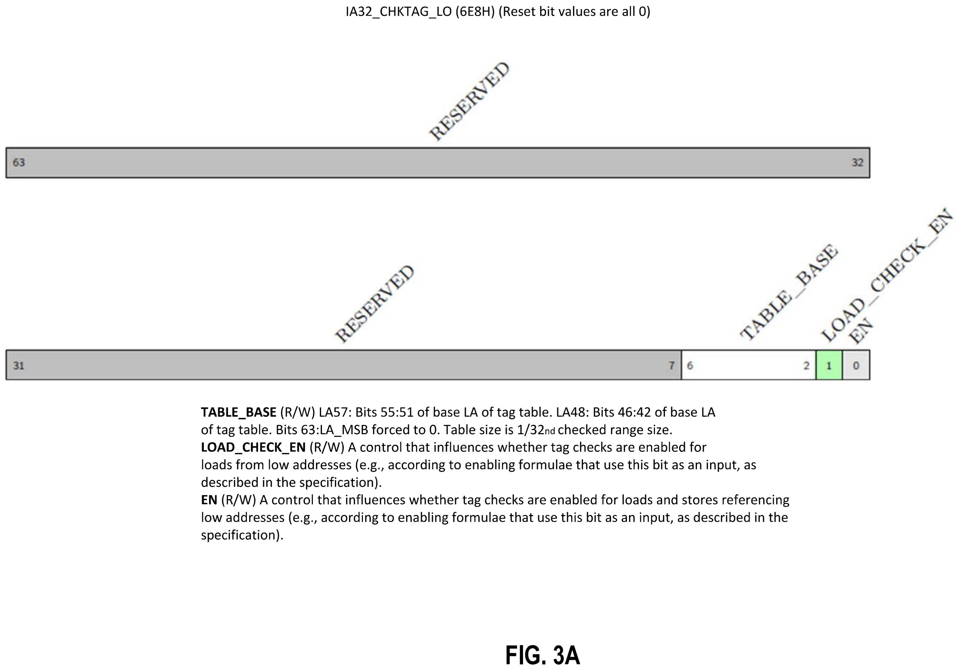

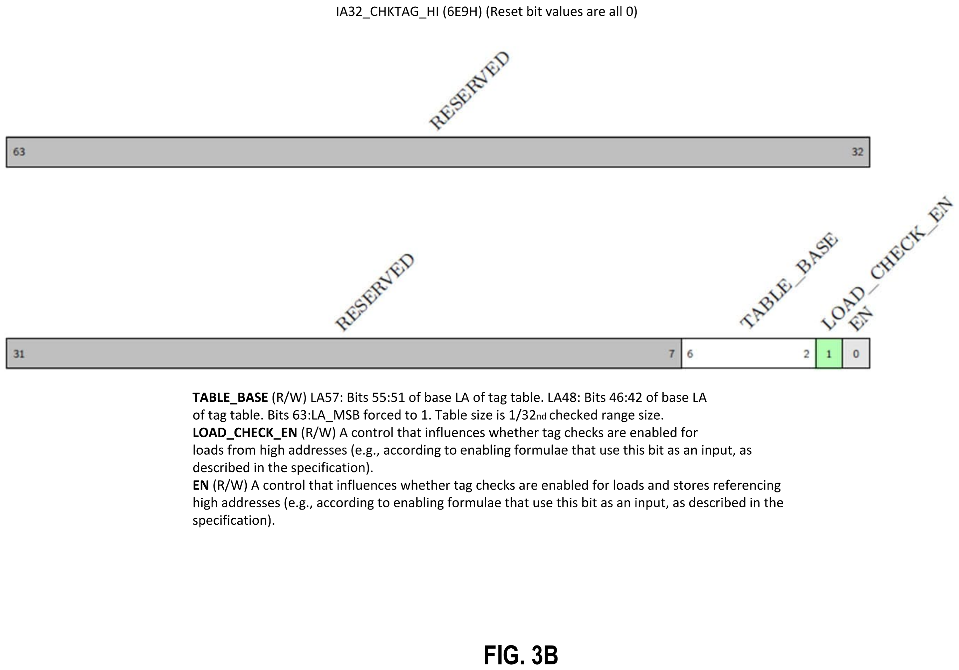

Embodiments may include new MSRs, two of which may be defined for example as follows:
IA32_CHKTAG_LO (Figure 3A):
   - Contains ChkTag enable bits for (low) addresses of which bit 63 is 0.
   - May be context-switched between processes.
IA32_CHKTAG_HI (Figure 3B):
   - Contains ChkTag enable bits for (high) addresses of which bit 63 is 1 and supervisor CPLs.
   - Expected to remain fixed across multiple processes.

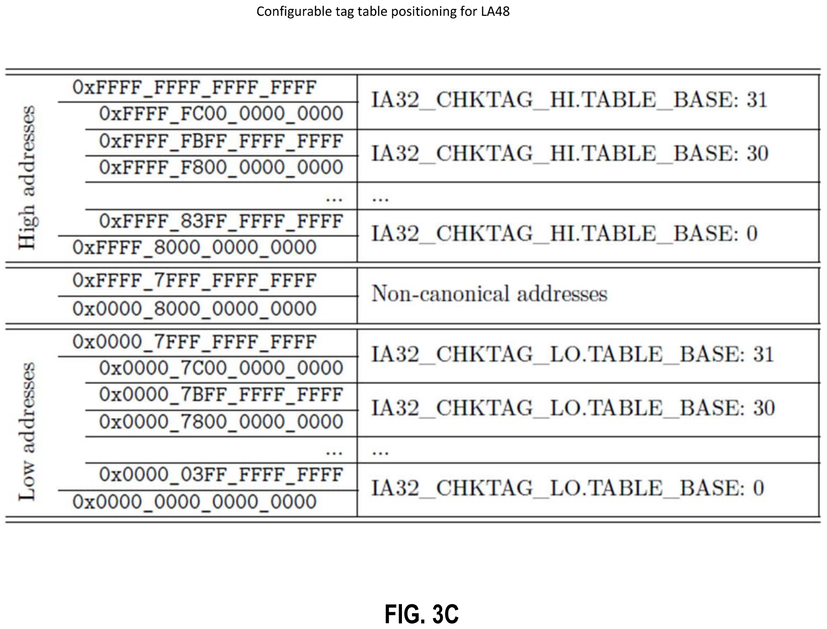

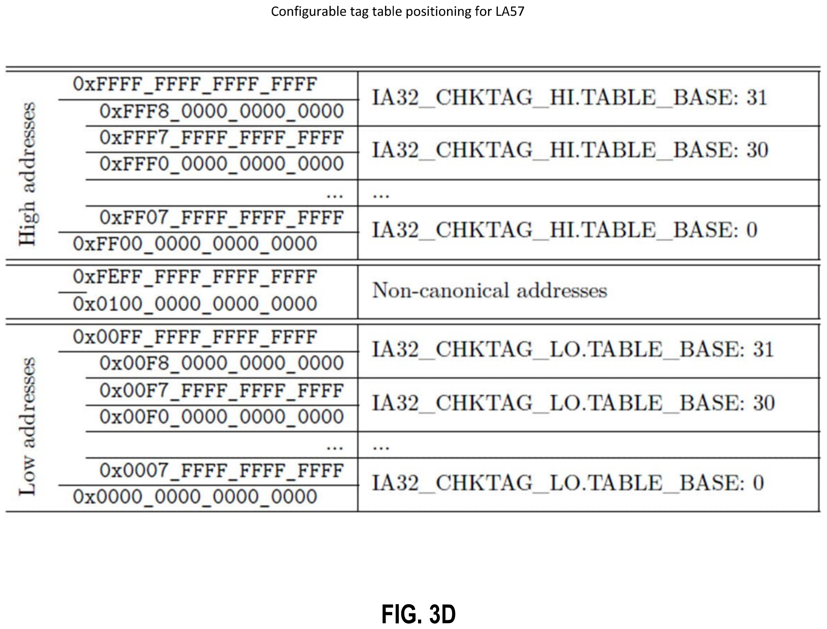

The MSRs may be thread-scoped, readable and writable (R/W), and initialized (e.g., in response to a reset) to 0. Attempts to set reserved bits may result in general protection faults. The configurable positioning of tag tables controlled by the MSRs is illustrated in Figure 3C for LA48 and in Figure 3D for LA57. Note that the addresses are listed as Data-LAs with LAM masking already completed.

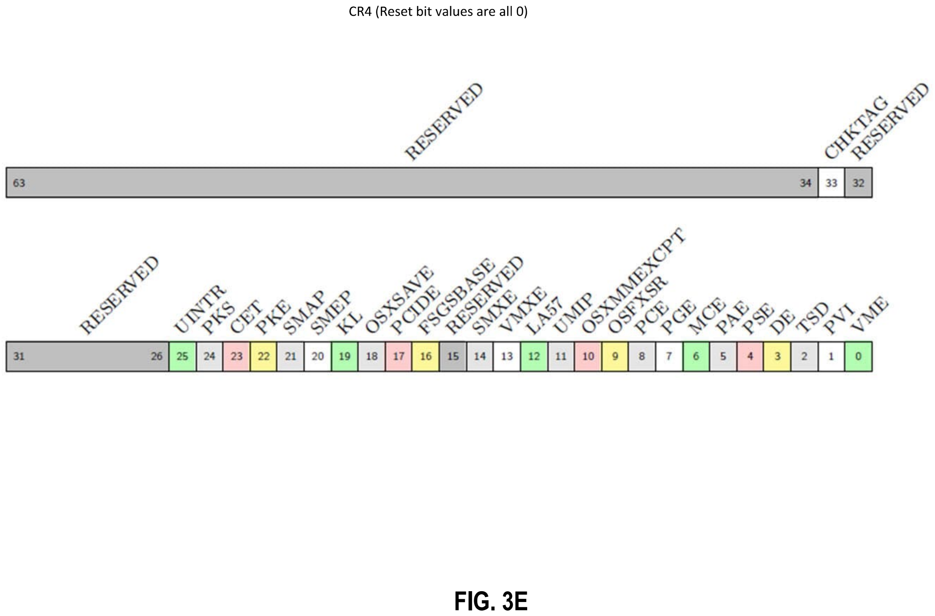

Embodiments may include an overall feature (e.g., ChkTag) enable bit, for example, CR4.CHKTAG (CR4 bit 33 as shown in Figure 3E).

In embodiments, the feature (e.g., ChkTag) may only be supported in 64-bit mode (IA32_EFER.LMA & CS.L == 1). Outside of 64-bit mode and on legacy processors lacking ChkTag support, CHKLDTAG and CHKSTTAG instructions are executed as NOPs and ChkTag prefixes and prefix bits are ignored.

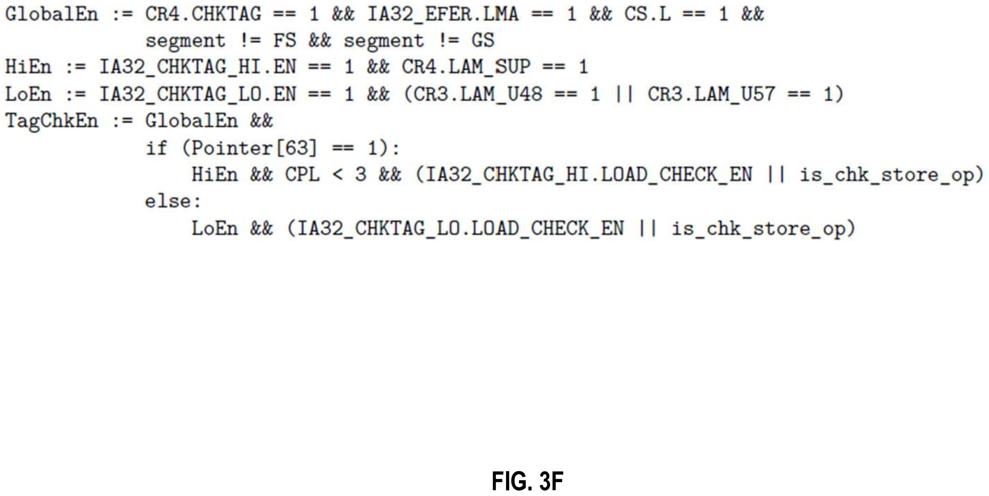

As an example, the formulae shown in Figure 3F define the effects of the ChkTag and LAM enable bits in IA32_CHKTAG_LO, IA32_CHKTAG_HI, CR3, and CR4. The value of TagChkEn determines whether the tag check operation being evaluated will be enabled. The parameter 'is_chk_store_op' is true for CHKSTTAG instructions as well as ChkTag-prefixed instructions that store to Data-LA, even if they also load from Data-LA.

In embodiments, the feature (e.g., ChkTag) does not support tag checking for memory operands with potentially non-zero segment base addresses, i.e., those with effective segments of FS or GS. However, a ChkTag-prefixed MOV instruction referencing those segments will still perform the Data-LA access, just without also performing a tag check. Other embodiments may support tag checking for memory operands with potentially non-zero segment base addresses.

In embodiments, it may be desired for privileged software to leave tag checking enabled while accessing user addresses (e.g., unlike with linear address space separation (LASS) and supervisor-mode access prevention (SMAP), in which supervisor software opts out of those access control checks when intentionally accessing user memory). Other enable bit definitions (e.g., a separate enable bit for each current privilege level (CPL) and address space half or other range definition) and combinations of enable bits are possible.

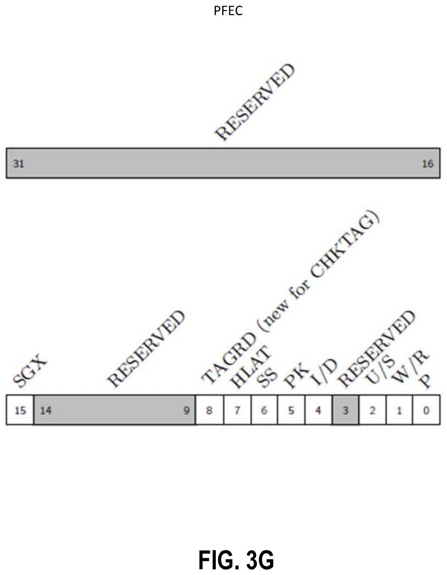

As shown by example in Figure 3G, the feature (e.g., ChkTag) may extend the Page-Fault Error Code (PFEC) with TAGRD (bit 8) that is set to 1 when a page fault occurs during a Tag-LA access. When TAGRD is set, CR2 will be set to Tag-LA.

In embodiments, the feature (e.g., ChkTag) may introduce a new architectural exception type, TaggingViolation, for tagging violation conditions, with:
- abbreviation = #TV
- vector = 22
- description = Tag Violation
- exception class = fault
- class = benign
- errorCode = yes
- sources = ChkTag tag-checking instructions: CHKLDTAG, CHKSTTAG, and ChkTag-prefixed MOV-type instructions

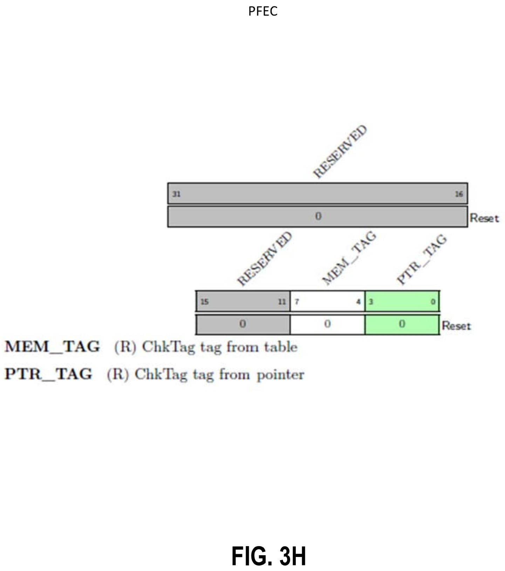

In connection with tagging violation exceptions, embodiments may include the following:
- If and only if flexible return and event delivery (FRED) is enabled, a faulting Data-LA will be pushed on the stack as event data. The faulting Data-LA is also saved in the virtual machine control structure (VMCS) as an exit qualification regardless of FRED enabling status in the guest.
- For tag mismatches, bits 63:4 of the faulting Data-LA identify the 16-byte-aligned base address of the granule containing Data-LA that caused a mismatch (does not include tag bits). In case of multiple mismatches, the reported mismatch is model-specific. Bits 3:0 of the faulting Data-LA are reserved, and software cannot assume that these bits will always be zeros.
- Furthermore, a tagging violation error code (TVEC, as shown for example in Figure 3H) is pushed on the stack or saved in a VMCS as an exiting-event identification error code. Bit 11 of exiting-event identification information will also be set to indicate that the error code is valid. In some implementations, the tags in the TVEC may always differ.
- Other combinations of one or more of the data items described in this section may be reported with tagging violation exceptions. Other types of data may be reported additionally or in place of the data described above, such as an index of a faulting data granule relative to the first granule containing the Data-LA.

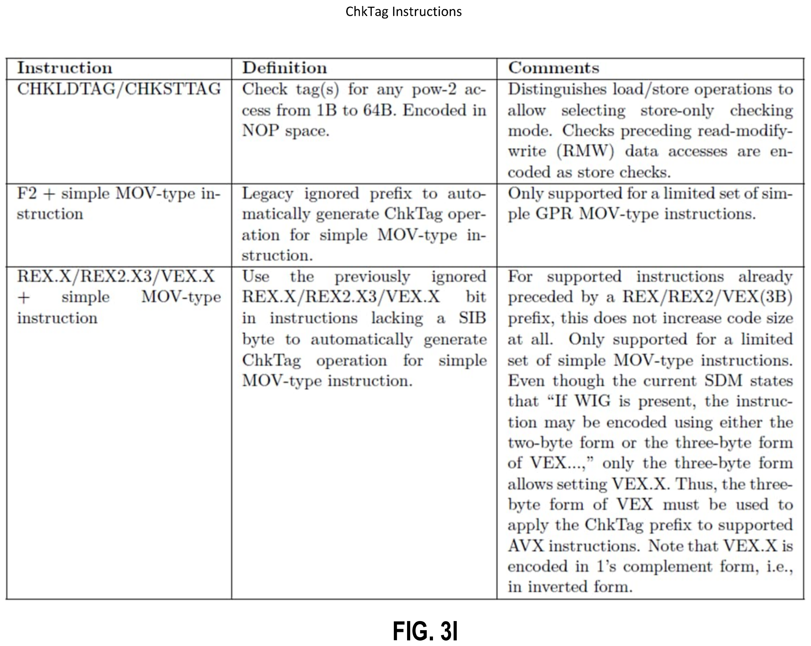

In embodiments, the feature (e.g., ChkTag) may introduce three categories of instruction set architecture (ISA) extensions, as shown for example in Figure 3I.

In embodiments, multi-byte access edge cases may be handled as follows (e.g., for one of two forms of behavior based on Data-LA and checked access size):
- For accesses straddling the non-canonical region, with some bytes in and some bytes out, the result will be #GP(0)/#SS(0), like a normal access.
- For accesses wrapping the 64-bit address space (fff... to 000...), the result will be #GP(0)/#SS(0), which is new for ChkTag operations. In some embodiments, this could also operate even when ChkTag is disabled.

In connection with tag load address ranges, embodiments may include the following:
- The number of tag bytes to be loaded for a tag check operation depends both on the size of the access being checked and on the alignment of the Data-LA.
- Tag loads are aligned to avoid generating page faults and extended page table (EPT) violations for pages outside of those containing the actual tag bytes needed for the current check.

Embodiments may include architectural properties to avoid leaving breadcrumbs that may permit distinguishing tag mismatches from tag matches in transient execution (e.g., cacheline state (including for page table entries (PTEs)), translation lookaside buffer (TLB) state, and load/store (LD/ST) operations (including for address/data (A/D) bit updates)).

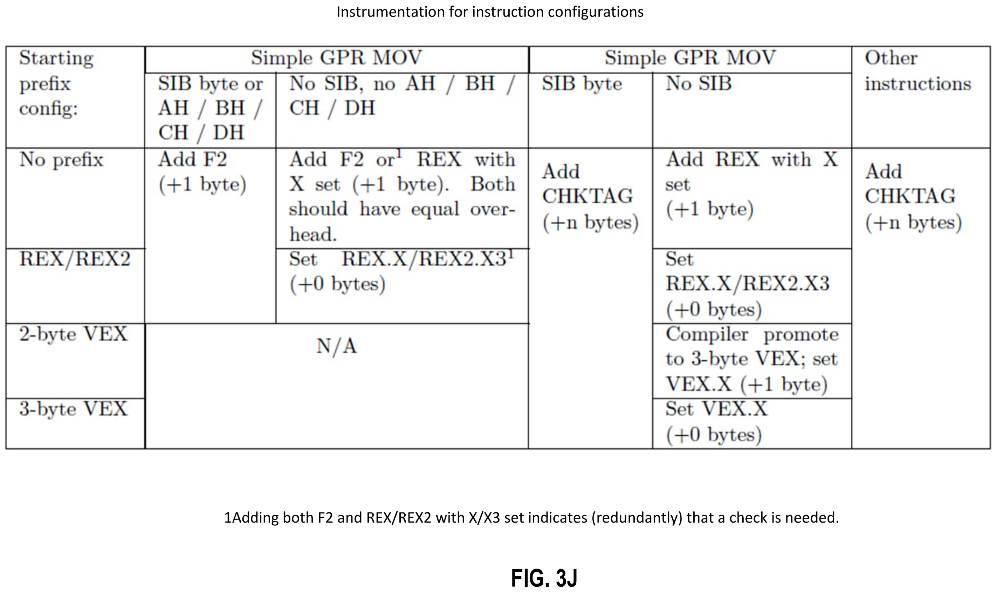

Figure 3J shows examples of instrumentation for instruction configurations. When an instruction encoding lists REX_X, that also refers interchangeably to REX2.X3.

Embodiments may co-exist with other technologies, for example, with interactions as follows:
- Intel^{®} Accelerator Interfacing Architecture (AiA): Unaffected.
- Intel^{®} AMX: Precede TILELOAD/TILESTORE instructions with CHKLDTAG/CHKSTTAG instructions if tag checks are desired.
- Intel^{®} APX CFCMOV: Conditionally check using CMOV with CHKLDTAG/CHKSTTAG instruction.
- Intel^{®} Control-flow Enforcement Technology (Intel^{®} CET): Unaffected.
- Debug registers: Tag loads trigger breakpoints.
- Scatters, gathers, masked MOVs: No hardware support for checking scatter, gather and masked MOV instructions. The compiler should compute the address range to check, and perform those checks using CHKLDTAG and CHKSTTAG instructions.
- Linear-Address Masking (LAM): ChkTag may use or depend upon LAM or other features for masking a subset of address bits. LAM masking is not applied to (implicit) Tag-LA.
- Linear-Address-Space Separation (LASS): When LASS is enabled, LASS checks are performed on Data-LA during tag check to prevent inappropriate transient breadcrumbs for tag access. However, not all software requiring ChkTag is LASS-compatible, e.g., some firmware, so LASS is not a prerequisite.
- Intel^{®} Machine Check Architecture (MCA)/Poison: On tag load-same as ordinary load.
- Microcode patch load: Unaffected.
- Intel^{®} Processor Event-Based Sampling (PEBS) and PerfMon: PEBS writes using LAs do not perform tag checks.
- Persistent memory (PMEM): PMEM can be checked and/or contain tag table and behave like volatile memory with respect to ChkTag.
- Processor Trace (RTIT): Natural support for tracing #TV, #TV VM exit with faulting data-LA, and tag load bit for EPT violation. VM exit on parts supporting event tracing. Code addresses are not impacted. Processor trace buffer writes are not checked. State reporting follows naturally from existing PT event trace architecture, for example:
   ∘ Traced via existing packet types: #TV,VM exit on #TV (including faulting data-LA as VM exit qualification), Exit qualification bit for EPT violations to distinguish tag loads.
   ∘ Not traced: Faulting Data-LA for #TV that does not cause VM exit, TVEC containing pointer and memory tag values for #TV (regardless of whether it exits VM), TAGRD bit in PFEC (since PFEC is not traced) for #PF (regardless of whether it exits VM)
- Protection Keys: Honored on tag loads.
- Intel^{®} Software Guard Extensions (Intel^{®} SGX): When executing inside an enclave with ChkTag is not enabled, ChkTag instructions are executed as NOPs and ChkTag prefixes are ignored. Software tag checks are possible.
- SMM, STM: CR4.CHKTAG is cleared on SMI entry and STM config, and restored on exit. SMM/STM can enable if it chooses. No changes to parallel VM exit/entry.
- Intel^{®} Trust Domain Extensions (Intel^{®} TDX): Within a TD, ChkTag works as expected (as it would in a VM). Attested via ATTRIBUTES.
- Intel^{®} TSX: Track tag loads in TSX read set like normal loads. Abort transaction on #TV.
- Intel^{®} TXT: CR4[63:32] saved, cleared, and restored across ACMs (existing behavior; includes CR4.CHKTAG).
- Intel^{®} VT-x: New VMCS fields include host and guest IA32_CHKTAG_HI state with associated VMX controls and control enumeration for loading on VM entry and VM exit. For example, two 64-bit VMCS fields may be used to store IA32_CHKTAG_HI state, one in the guest-state area and one in the host-state area. In addition, there may be a "load IA32_CHKTAG_HI" VM-entry control and a "load IA32_CHKTAG_HI" VM exit control. VMX transitions may manage the MSR as follows: If the "load IA32_CHKTAG_HI" VM-entry control is 1, VM entry will load the IA32_CHKTAG_HI MSR from the corresponding field in the guest-state area. If the 1-setting of the "load IA32_CHKTAG_HI" VM-entry control is supported, VM exits may unconditionally save the value of the IA32_CHKTAG_HI MSR into the corresponding field in the guest-state area, or a separate control could be defined to control that behavior. If the "load IA32_CHKTAG_HI" VM-exit control is 1, VM exits may load the IA32_CHKTAG_HI MSR from the corresponding field in the host-state area. Additional VMCS fields and controls may be defined for saving and restoring guest and/or host IA32_CHKTAG_LO MSR state on VM entries and/or exits. Natural support may be provided for exiting on #TV with reporting for faulting Data-LA and TVEC. A new EPT violation exit qualification bit may be defined for distinguishing tag loads (including page walks). #VE may report the same information as EPT violation VM exit.
- Intel^{®} VT-d: In the absence of Shared Virtual Memory (SVM), VT-d translations are GPA → HPA and GPAs are not affected by LAM nor ChkTag.
- Intel^{®} VT-Redirect Protections (Intel^{®} VT-rp) / Hypervisor-managed Linear-Address Translation (HLAT): HLAT walk process is used for all applicable LAs (even Tag-LAs).

As mentioned in the background section, a processor, processor core, execution core, etc. (any of which may be referred to as a core) may execute instructions defined by an ISA. An ISA may include one or more NOPs that may be redefined as one or more new instructions to extend the ISA. However, the number of NOPs may be limited. Therefore, embodiments provide a technique for adding multiple new instructions using the opcode of only one NOP.

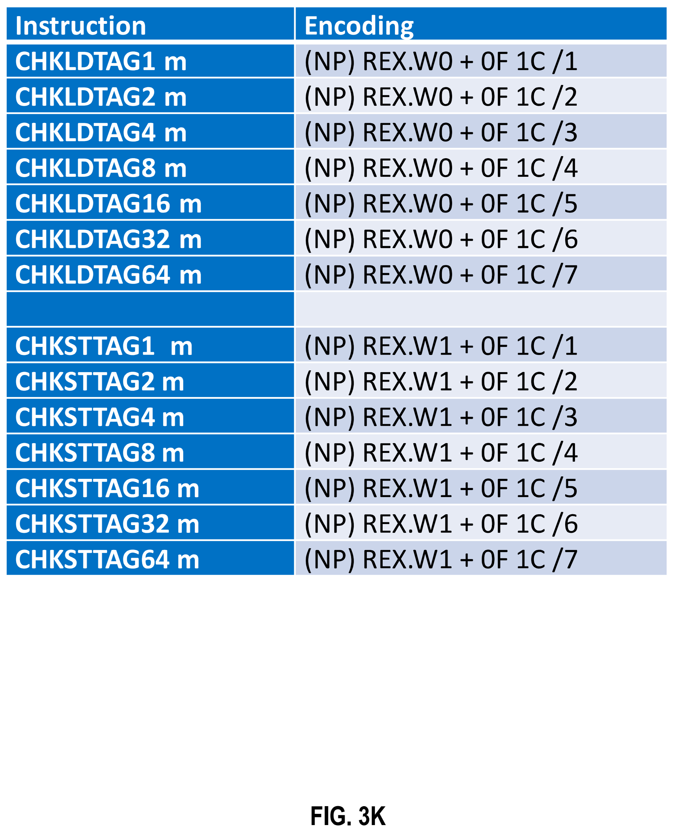

As an example, an embodiment includes using the opcode of one NOP (e.g., 0F 1C) to add two new instructions (e.g., CHKLDTAG and CHKSTTAG) to the x86 ISA. Furthering this example, the opcode may also be extended to indicate the size of one or more data accesses related to the new instruction. Figure 3K illustrates this example.

Figure 3K shows example encodings for fourteen new instructions, the operation of which is described below. In the 'Encoding' column, the encodings are indicated according to the Intel^{®} 64 instruction format, which includes an opcode field and may include a REX prefix field and an opcode extension field. All of these instructions use the same two-byte hexadecimal opcode (0F 1C) of a NOP, thus preserving other NOP opcodes for other future instructions.

As shown in the 'Encoding' column, a REX prefix (hexadecimal 40 to 4F) indicates that the two-byte opcode should be decoded as a CHKTAG instruction (as described below), with the W bit of the REX prefix indicating whether the CHKTAG instruction is a CHKLDTAG (e.g., W=0 or REX.WO) or a CHKSTTAG (e.g., W=1 or REX.W1) instruction. Thus, embodiments provide for distinguishing instructions (e.g., CHKTAG instructions for tag checking memory accesses) involving or related to stores from those involving or related to loads, thus supporting modes of operation related to only one of stores or loads (e.g., the ChkTag architecture supports a mode of operation that checks memory tags for stores but not loads) without allocating entirely separate opcodes.

In embodiments, the more compact REX.WO encoding is used for loads because load instructions may be more numerous than store instructions. Stores that already use the REX X and/or B bits do not suffer any code size increase from the REX.W1 encoding.

Furthermore, the seven CHKLDTAG instructions may be distinguished by an opcode extension (e.g., 1, 2, 3, 4, 5, 6, or 7 in the reg field of the ModR/M byte), as are the seven CHKSTTAG instructions, to indicate the size of the data access(es) (e.g., 1, 2, 4, 8, 16, 32, or 64 bytes, respectively). Accordingly, the mnemonics shown in 'Instruction' column, are CHKLDTAG1, CHKLDTAG2, CHKLDTAG4, CHKLDTAG8, CHKLDTAG16, CHKLDTAG32, and CHKLDTAG64, respectively, and CHKSTTAG1, CHKSTTAG2, CHKSTTAG4, CHKSTTAG8, CHKSTTAG16, CHKSTTAG32, and CHKSTTAG64, respectively, with the 'm' indicating that the instruction formats include a memory operand to indicate the memory location for the data access(es).

Encoding the data access size into the opcode allows these encodings to include no other prefixes (e.g., a hexadecimal 66 prefix to indicate operand size), thus providing for smaller code size. Therefore, column 104 also shows that the encodings use no other prefix (NP).

Various other embodiments are possible, including but not limited to using a bit (e.g., the W bit) in another prefix (e.g., an Intel^{®} Advanced Processor Extensions (APX) REX2 prefix) to distinguish between loads and stores.

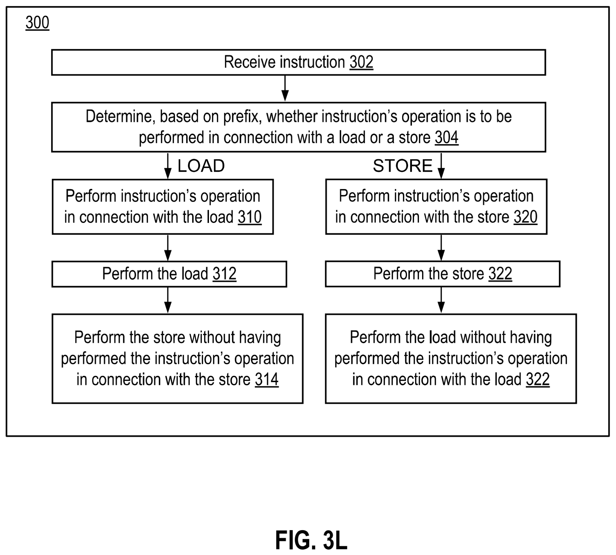

Figure 3L illustrates a method 300 for using prefix bits to distinguish between loads and stores according to embodiments.

In 302 instruction decoder circuitry receives an instruction in an extended instruction set, the instruction having an opcode corresponding to a NOP in a non-extended instruction set. In 304, it is determined, based on a value of one or more instruction prefix bits, whether an operation (e.g., a memory tag checking operation, which may include a memory tag load operation) corresponding to the instruction (e.g., CHKLDTAG or CHKSTTAG) is to be performed in connection with a load operation or a store operation (e.g., a data load or data store operation performed in response to a load or store instruction following the CHKLDTAG or CHKSTTAG instruction, in an address range specified by the CHKLDTAG or CHKSTTAG instruction), and, in embodiments, a data access size may be determined based on an extended opcode of the instruction.

In 310, the operation (e.g., memory tag checking) corresponding to the instruction (e.g., CHKLDTAG) is performed in connection with the load operation (e.g., performed in response to a load instruction following the CHKLDTAG instruction, in an address range specified by the CHKLDTAG instruction). For example, a memory tag check may be performed for an address (or an address range including an address) to be used in the load operation. In 312, the load operation is performed.

In 314, a store operation is performed (e.g., in response to a store instruction) without the operation (e.g., memory tag checking) corresponding to the instruction (e.g., CHKLDTAG) having been performed in connection with the store operation. For example, since the preceding tag checking instruction was for loads (CHKLDTAG) and not for stores, the store operation may be performed in response to a store instruction without a memory tag check for the address used in the store operation.

In 320, the operation (e.g., memory tag checking) corresponding to the instruction (e.g., CHKSTTAG) is performed in connection with the store operation (e.g., performed in response to a load instruction following the CHKSTTAG instruction, in an address range specified by the CHKSTTAG instruction). For example, a memory tag check may be performed for an address (or an address range including an address) to be used in the store operation. In 322, the store operation is performed.

In 324, a load operation is performed (e.g., in response to a load instruction) without the operation (e.g., memory tag checking) corresponding to the instruction (e.g., CHKSTTAG) having been performed in connection with the load operation. For example, since the preceding tag checking instruction was for stores (CHKSTTAG) and not for loads, the load operation may be performed in response to a load instruction without a memory tag check for the address used in the load operation.

Embodiments may include multiple types of CHKTAG instructions, for example, a CHKLDTAG instruction to provide for tag checking for load operations and a CHKSTTAG instruction to provide for tag checking for store operations, such that different tag checking modes may be supported (e.g., check loads and stores, check stores but not loads, etc.). In embodiments, read-modify-write operations may be treated as stores (e.g., perform check(s) preceding read-modify-write data accesses in response to CHKSTTAG instruction(s)). Additional variants of CHKTAG instructions may be defined with the intent of compilers associating each variant with a different category of instructions, e.g., read-modify-write instructions, floating point instructions, etc., with enabling for each variant controlled based on a combination of enable bits.

In embodiments, instruction encoding choices may be based on factors such as the frequency of corresponding instructions and/or operations. For example, tag checking for loads may be assigned the more compact REX.WO encoding because load instructions may be more numerous than store instructions.

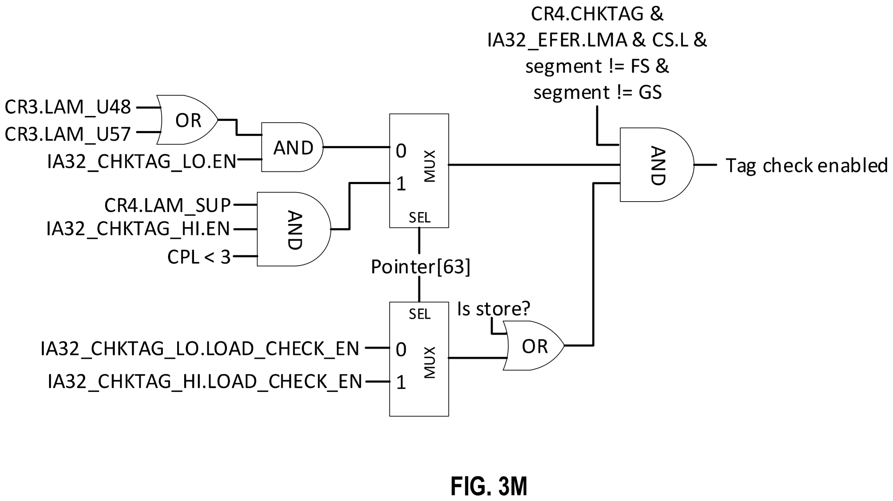

Various embodiments may include various implementations for enabling operations (e.g., tag checking) to be performed in response to decoded (or partially decoded) instructions. For example, the enabling state for CHKTAG instructions may be determined using a circuit such as the enable circuit shown in Figure 3M, which allows discarding instructions in the front-end (e.g., front-end unit 630 in Figure 6B, described below) that may be deemed as unneeded independent of the value of the corresponding memory address, without consuming additional pipeline resources.

The following signals (which may be defined within an x86 ISA, a Linear Address Masking (LAM) architecture, and/or a ChkTag architecture, and/or may be programmed into a model-specific register (MSR) or control register (e.g., CR3, CR4)) involved in controlling the enable circuit are shown in Figure 3M.
- CR3.LAM_U48 (user LAM48 enable bit in CR3, involved in masking of linear address bits 62:48 for user pointers)
- CR3.LAM_U57 (user LAM57 enable bit in CR3, involved in masking of linear address bits 62:57 for user pointers)
- IA32_CHKTAG_LO.EN (ChkTag enable bit in IA32_CHKTAG_LO MSR, involved in controlling tag checking for loads and stores referencing low addresses)
- CR4.LAM_SUP (supervisor LAM enable bit in CR4, involved in masking for supervisor pointers)
- IA32_CHKTAG_HI.EN (ChkTag enable bit in IA32_CHKTAG_HI MSR, involved in controlling tag checking for loads and stores referencing high addresses)
- CPL (current privilege level)
- IA32_CHKTAG_LO.LOAD_CHECK_EN (load ChkTag enable bit in IA32_CHKTAG_LO MSR, involved in controlling tag checking for loads referencing low addresses)
- IA32_CHKTAG_HI.LOAD_CHECK_EN (load ChkTag enable bit in IA32_CHKTAG_HI MSR, involved in controlling tag checking for loads referencing high addresses)
- CR4.CHKTAG (overall ChkTag enable bit in CR4)
- IA32_EFER.LMA (bit in extended feature enable MSR (EFER), involved in indicating whether IA-32e mode is active)
- CS.L (code segment descriptor bit involved in determining sub-mode operation in IA-32e mode)
- Segment (independent address space that may be associated with the address for the data access, e.g., CS (code segment), DS (data segment), SS (stack segment) ES (data segment), FS (data segment), GS (data segment))
- Pointer[63] (bit 63 of pointer for data access operation)
- Is store? (is the data access a store)

For example, consider the following configuration values:
- CR3.LAM_U48 = 0
- CR3.LAM_U57 = 0
- IA32_CHKTAG_LO.EN = 0
- CR4.LAM_SUP = 1
- IA32_CHKTAG_HI.EN = 1
- CPL = 3
- IA32_CHKTAG_LO.LOAD_CHECK_EN = 0
- IA32_CHKTAG_HI.LOAD_CHECK_EN = 1
- CR4.CHKTAG = 1
- IA32_EFER.LMA = 1
- CS.L = 1
- Segment = DS
- It is a store that is being checked

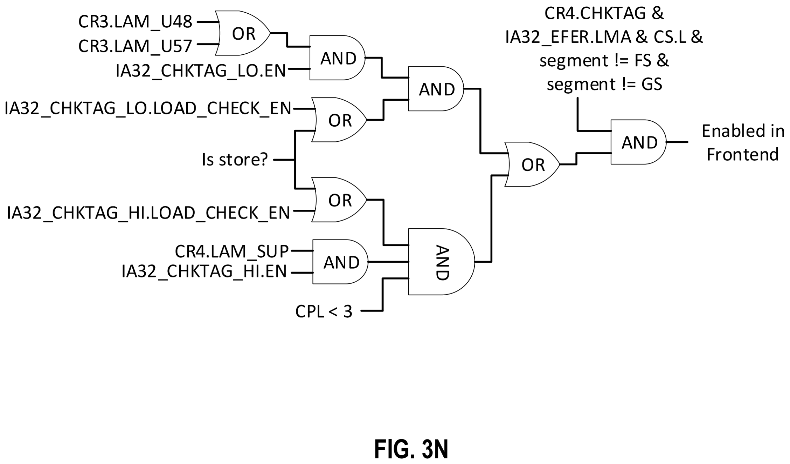

Even though many portions of the enabling circuit would compute a high value, the ultimate result of the circuit will indicate that the tag check is unneeded, even without knowing the value of the pointer. Therefore, embodiments may allow the front-end (e.g., front-end unit 630 in Figure 6B, described below) of the processor to avoid consuming any additional pipeline resources. Figure 3N shows an example of decision logic in the front-end for enabling checks.

In embodiments, the division of enable bits into different types of registers described above may be desirable.

For example, usages may include toggling IA32_CHKTAG_LO/HI.EN bits and/or IA32_CHKTAG_LO/HI.LOAD_CHECK _EN bits.
- Toggling between a first mode for checking loads and stores and a second mode for checking only stores to modulate overheads may benefit from updating *.LOAD_CHECK_EN quickly to reduce overheads.
- Toggling between a second mode for checking only stores and a third mode for no checking to modulate overheads may benefit from updating *.EN quickly to reduce overheads.

As another example, enable bits described above may be placed in MSRs to reduce overheads of updating them. The potential alternative of placing enable bits in CR3 or CR4 registers would be slower, since CR3 and CR4 updates may be longer, serializing operations.

As another example, conditioning IA32_CHKTAG_LO.EN on LAM_U48/U57 also avoids the need for updating IA32_CHKTAG_LO when switching between tagged and untagged processes, assuming a matching tag table base, ChkTag EN, and LOAD_CHECK_EN across LAM processes. If that is not the case, additional register updates may be needed.

As another example, an enable bit architecture similar to that shown above may also help to speed up virtual machine monitor (VMM) emulation for ChkTag.
- A VMM emulating a guest memory access or tag check already inspects guest CR3 during a guest page walk.
- Determining low address (i.e., with Pointer[63] == 0) ChkTag enabling adds no cost when LAM is disabled (just additionally read guest IA32_CHKTAG_LO when LAM_U48/U57 is enabled).
- VMM may conclude when high address (i.e., with Pointer[63] == 1) checking is disabled based on guest CR4.LAM_SUP being disabled (just additionally read guest IA32_CHKTAG_HI when LAM_SUP is enabled).

Embodiments may include other enable bit architectures to provide similar benefits as those described above.

Example apparatuses, methods, etc.

According to some examples, an apparatus (e.g., a hardware processor, processor core, execution core, etc.) includes instruction decoder circuitry to decode a first instruction, the first instruction to reference a memory location via a tagged pointer; and execution circuitry coupled to the instruction decoder circuitry, the execution circuitry to perform one or more memory tag checking operations in response to the first instruction. The one or more memory tag check operations include referencing an entry location to find a first tag value and comparing the first tag value to a second tag value provided by the tagged pointer. The entry location is to be in a first subregion of a memory region to be reserved for a tag table. The first subregion is to be in a first set of subregions of the memory region. The first set is to include only subregions committed to tag storage. The memory region to be reserved for the tag table is also to include a second set of subregions. The second set is to include only subregions uncommitted to tag storage.

Any such examples may include any or any combination of the following aspects. The first set is to be enlarged on demand as memory tags are initialized. The one or more memory tagging checking operations also include causing an exception in response to a mismatch between the first tag value and the second tag value. The memory location is to be referenced with a linear address in a linear address space. The linear address is to be used to find the first tag value. The first subregion is to be a page in linear memory. The page has a size of 4K bytes. To find the first tag value includes calculating a scaled address by dividing by a first number a distance of the linear address from a lowest address in the linear address space, the first number to be based on a size of the memory location, and a size of the first tag value. The size of the memory location is 16 bytes. The size of the first tag value is four bits. The first number is 32. The first subregion includes tag storage space to cover 32 data pages. The linear address space has a first size and the memory region to be reserved for the tag table has a second size, wherein the second size is the first size divided by 128K. The apparatus also includes a register to store a base address of the tag table. To find the first tag value also includes adding the scaled address to the base address. The linear address is in a first linear address space of a plurality of linear address spaces and the memory region to be reserved for the tag table is in the first linear address space of a plurality of linear address spaces.

According to some examples, a method includes decoding a first instruction, the first instruction to reference a memory location via a tagged pointer; and performing one or more memory tag checking operations in response to the first instruction, wherein the one or more memory tag check operations include referencing an entry location to find a first tag value and comparing the first tag value to a second tag value provided by the tagged pointer; and the entry location is to be in a first subregion of a memory region to be reserved for a tag table, the first subregion is to be in a first set of subregions of the memory region, the first set is to include only subregions committed to tag storage, the memory region to be reserved for the tag table is also to include a second set of subregions, and the second set is to include only subregions uncommitted to tag storage.

Any such examples may include any or any combination of the following aspects. The method also includes enlarging the first set on demand as memory tags are initialized. The one or more memory tagging checking operations also include causing an exception in response to a mismatch between the first tag value and the second tag value. The memory location is to be referenced with a linear address in a linear address space. The linear address is to be used to find the first tag value. The first subregion is to be a page in linear memory. The page has a size of 4K bytes. To find the first tag value includes calculating a scaled address by dividing by a first number a distance of the linear address from a lowest address in the linear address space, the first number to be based on a size of the memory location, and a size of the first tag value. The size of the memory location is 16 bytes. The size of the first tag value is four bits. The first number is 32. The first subregion includes tag storage space to cover 32 data pages. The linear address space has a first size and the memory region to be reserved for the tag table has a second size, wherein the second size is the first size divided by 128K. The method also includes storing a base address of the tag table in a register. To find the first tag value also includes adding the scaled address to the base address. The linear address is in a first linear address space of a plurality of linear address spaces and the memory region to be reserved for the tag table is in the first linear address space of a plurality of linear address spaces.

According to some examples, a non-transitory machine-readable medium stores instructions, including a first instruction which, when decoded by a machine, causes the machine to perform a method comprising referencing an entry location to find a first tag value the first instruction to reference a memory location via a tagged pointer; and comparing the first tag value to a second tag value provided by a tagged pointer; wherein the first instruction references a memory location via the tagged pointer; and the entry location is to be in a first subregion of a memory region to be reserved for a tag table, the first subregion is to be in a first set of subregions of the memory region, the first set is to include only subregions committed to tag storage, the memory region to be reserved for the tag table is also to include a second set of subregions, and the second set is to include only subregions uncommitted to tag storage.

Any such examples may include any or any combination of the following aspects. The method also includes enlarging the first set on demand as memory tags are initialized. The one or more memory tagging checking operations also include causing an exception in response to a mismatch between the first tag value and the second tag value. The memory location is to be referenced with a linear address in a linear address space. The linear address is to be used to find the first tag value. The first subregion is to be a page in linear memory. The page has a size of 4K bytes. To find the first tag value includes calculating a scaled address by dividing by a first number a distance of the linear address from a lowest address in the linear address space, the first number to be based on a size of the memory location, and a size of the first tag value. The size of the memory location is 16 bytes. The size of the first tag value is four bits. The first number is 32. The first subregion includes tag storage space to cover 32 data pages. The linear address space has a first size and the memory region to be reserved for the tag table has a second size, wherein the second size is the first size divided by 128K. The method also includes storing a base address of the tag table in a register. To find the first tag value also includes adding the scaled address to the base address. The linear address is in a first linear address space of a plurality of linear address spaces and the memory region to be reserved for the tag table is in the first linear address space of a plurality of linear address spaces.

According to some examples, an apparatus may include means for performing any function disclosed herein; an apparatus may include a data storage device that stores code that when executed by a hardware processor or controller causes the hardware processor or controller to perform any method or portion of a method disclosed herein; an apparatus, method, system etc. may be as described in the detailed description; a non-transitory machine-readable medium may store instructions that when decoded and/or executed by a machine causes the machine to perform any method or portion of a method disclosed herein. Embodiments may include any details, features, etc. or combinations of details, features, etc. described in this specification.

### Example Computer Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

FIG. 4 illustrates an example computing system. Multiprocessor system 400 is an interfaced system and includes a plurality of processors or cores including a first processor 470 and a second processor 480 coupled via an interface 450 such as a point-to-point (P-P) interconnect, a fabric, and/or bus. In some examples, the first processor 470 and the second processor 480 are homogeneous. In some examples, the first processor 470 and the second processor 480 are heterogenous. Though the example system 400 is shown to have two processors, the system may have three or more processors, or may be a single processor system. In some examples, the computing system is a system on a chip (SoC).

Processors 470 and 480 are shown including integrated memory controller (IMC) circuitry 472 and 482, respectively. Processor 470 also includes interface circuits 476 and 478; similarly, second processor 480 includes interface circuits 486 and 488. Processors 470, 480 may exchange information via the interface 450 using interface circuits 478, 488. IMCs 472 and 482 couple the processors 470, 480 to respective memories, namely a memory 432 and a memory 434, which may be portions of main memory locally attached to the respective processors.

Processors 470, 480 may each exchange information with a network interface (NW I/F) 490 via individual interfaces 452, 454 using interface circuits 476, 494, 486, 498. The network interface 490 (e.g., one or more of an interconnect, bus, and/or fabric, and in some examples is a chipset) may optionally exchange information with a coprocessor 438 via an interface circuit 492. In some examples, the coprocessor 438 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 470, 480 or outside of both processors, yet connected with the processors via an interface such as P-P interconnect, such that either or both processors' local cache information may be stored in the shared cache if a processor is placed into a low power mode.

Network interface 490 may be coupled to a first interface 416 via interface circuit 496. In some examples, first interface 416 may be an interface such as a Peripheral Component Interconnect (PCI) interconnect, a PCI Express interconnect or another I/O interconnect. In some examples, first interface 416 is coupled to a power control unit (PCU) 417, which may include circuitry, software, and/or firmware to perform power management operations with regard to the processors 470, 480 and/or co-processor 438. PCU 417 provides control information to a voltage regulator (not shown) to cause the voltage regulator to generate the appropriate regulated voltage. PCU 417 also provides control information to control the operating voltage generated. In various examples, PCU 417 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 417 is illustrated as being present as logic separate from the processor 470 and/or processor 480. In other cases, PCU 417 may execute on a given one or more of cores (not shown) of processor 470 or 480. In some cases, PCU 417 may be implemented as a microcontroller (dedicated or general-purpose) or other control logic configured to execute its own dedicated power management code, sometimes referred to as P-code. In yet other examples, power management operations to be performed by PCU 417 may be implemented externally to a processor, such as by way of a separate power management integrated circuit (PMIC) or another component external to the processor. In yet other examples, power management operations to be performed by PCU 417 may be implemented within BIOS or other system software.

Various I/O devices 414 may be coupled to first interface 416, along with a bus bridge 418 which couples first interface 416 to a second interface 420. In some examples, one or more additional processor(s) 415, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 416. In some examples, second interface 420 may be a low pin count (LPC) interface. Various devices may be coupled to second interface 420 including, for example, a keyboard and/or mouse 422, communication devices 427 and storage circuitry 428. Storage circuitry 428 may be one or more non-transitory machine-readable storage media as described below, such as a disk drive or other mass storage device which may include instructions/code and data 430. Further, an audio I/O 424 may be coupled to second interface 420. Note that other architectures than the point-to-point architecture described above are possible. For example, instead of the point-to-point architecture, a system such as multiprocessor system 400 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

FIG. 5 illustrates a block diagram of an example processor and/or SoC 500 that may have one or more cores and an integrated memory controller. The solid lined boxes illustrate a processor 500 with a single core 502(A), system agent unit circuitry 510, and a set of one or more interface controller unit(s) circuitry 516, while the optional addition of the dashed lined boxes illustrates an alternative processor 500 with multiple cores 502(A)-(N), a set of one or more integrated memory controller unit(s) circuitry 514 in the system agent unit circuitry 510, and special purpose logic 508, as well as a set of one or more interface controller units circuitry 516. Note that the processor 500 may be one of the processors 470 or 480, or co-processor 438 or 415 of FIG. 4.

Thus, different implementations of the processor 500 may include: 1) a CPU with the special purpose logic 508 being integrated graphics and/or scientific (throughput) logic (which may include one or more cores, not shown), and the cores 502(A)-(N) being one or more general purpose cores (e.g., general purpose in-order cores, general purpose out-of-order cores, or a combination of the two); 2) a coprocessor with the cores 502(A)-(N) being a large number of special purpose cores intended primarily for graphics and/or scientific (throughput); and 3) a coprocessor with the cores 502(A)-(N) being a large number of general purpose in-order cores. Thus, the processor 500 may be a general-purpose processor, coprocessor, or special-purpose processor, such as, for example, a network or communication processor, compression engine, graphics processor, GPGPU (general purpose graphics processing unit), a high throughput many integrated cores (MIC) coprocessor (including 30 or more cores), embedded processor, or the like. The processor may be implemented on one or more chips. The processor 500 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 504(A)-(N) within the cores 502(A)-(N), a set of one or more shared cache unit(s) circuitry 506, and external memory (not shown) coupled to the set of integrated memory controller unit(s) circuitry 514. The set of one or more shared cache unit(s) circuitry 506 may include one or more mid-level caches, such as level 2 (L2), level 3 (L3), level 4 (L4), or other levels of cache, such as a last level cache (LLC), and/or combinations thereof. While in some examples interface network circuitry 512 (e.g., a ring interconnect) interfaces the special purpose logic 508 (e.g., integrated graphics logic), the set of shared cache unit(s) circuitry 506, and the system agent unit circuitry 510, alternative examples use any number of well-known techniques for interfacing such units. In some examples, coherency is maintained between one or more of the shared cache unit(s) circuitry 506 and cores 502(A)-(N). In some examples, interface controller unit circuitry 516 couples the cores 502 to one or more other devices 518 such as one or more I/O devices, storage, one or more communication devices (e.g., wireless networking, wired networking, etc.), etc.

In some examples, one or more of the cores 502(A)-(N) are capable of multi-threading. The system agent unit circuitry 510 includes those components coordinating and operating cores 502(A)-(N). The system agent unit circuitry 510 may include, for example, power control unit (PCU) circuitry and/or display unit circuitry (not shown). The PCU may be or may include logic and components needed for regulating the power state of the cores 502(A)-(N) and/or the special purpose logic 508 (e.g., integrated graphics logic). The display unit circuitry is for driving one or more externally connected displays.

The cores 502(A)-(N) may be homogenous in terms of instruction set architecture (ISA). Alternatively, the cores 502(A)-(N) may be heterogeneous in terms of ISA; that is, a subset of the cores 502(A)-(N) may be capable of executing an ISA, while other cores may be capable of executing only a subset of that ISA or another ISA.

### Example Core Architectures - In-order and out-of-order core block diagram.

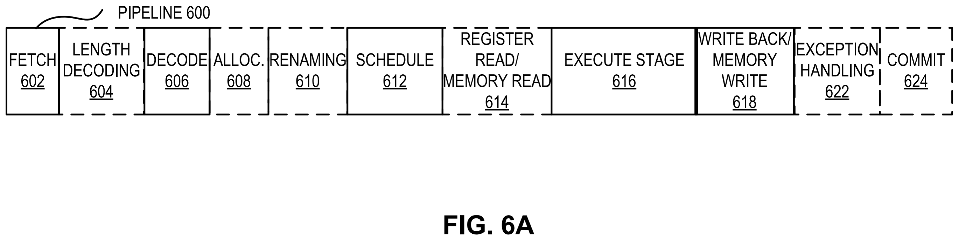

FIG. 6A is a block diagram illustrating both an example in-order pipeline and an example register renaming, out-of-order issue/execution pipeline according to examples. FIG. 6B is a block diagram illustrating both an example in-order architecture core and an example register renaming, out-of-order issue/execution architecture core to be included in a processor according to examples. The solid lined boxes in FIGS. 6A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 6A, a processor pipeline 600 includes a fetch stage 602, an optional length decoding stage 604, a decode stage 606, an optional allocation (Alloc) stage 608, an optional renaming stage 610, a schedule (also known as a dispatch or issue) stage 612, an optional register read/memory read stage 614, an execute stage 616, a write back/memory write stage 618, an optional exception handling stage 622, and an optional commit stage 624. One or more operations can be performed in each of these processor pipeline stages. For example, during the fetch stage 602, one or more instructions are fetched from instruction memory, and during the decode stage 606, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 606 and the register read/memory read stage 614 may be combined into one pipeline stage. In one example, during the execute stage 616, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 6B may implement the pipeline 600 as follows: 1) the instruction fetch circuitry 638 performs the fetch and length decoding stages 602 and 604; 2) the decode circuitry 640 performs the decode stage 606; 3) the rename/allocator unit circuitry 652 performs the allocation stage 608 and renaming stage 610; 4) the scheduler(s) circuitry 656 performs the schedule stage 612; 5) the physical register file(s) circuitry 658 and the memory unit circuitry 670 perform the register read/memory read stage 614; the execution cluster(s) 660 perform the execute stage 616; 6) the memory unit circuitry 670 and the physical register file(s) circuitry 658 perform the write back/memory write stage 618; 7) various circuitry may be involved in the exception handling stage 622; and 8) the retirement unit circuitry 654 and the physical register file(s) circuitry 658 perform the commit stage 624.

FIG. 6B shows a processor core 690 including front-end unit circuitry 630 coupled to execution engine unit circuitry 650, and both are coupled to memory unit circuitry 670. The core 690 may be a reduced instruction set architecture computing (RISC) core, a complex instruction set architecture computing (CISC) core, a very long instruction word (VLIW) core, or a hybrid or alternative core type. As yet another option, the core 690 may be a special-purpose core, such as, for example, a network or communication core, compression engine, coprocessor core, general purpose computing graphics processing unit (GPGPU) core, graphics core, or the like.

The front-end unit circuitry 630 may include branch prediction circuitry 632 coupled to instruction cache circuitry 634, which is coupled to an instruction translation lookaside buffer (TLB) 636, which is coupled to instruction fetch circuitry 638, which is coupled to decode circuitry 640. In one example, the instruction cache circuitry 634 is included in the memory unit circuitry 670 rather than the front-end circuitry 630. The decode circuitry 640 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 640 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 640 may be implemented using various different mechanisms. Examples of suitable mechanisms include, but are not limited to, look-up tables, hardware implementations, programmable logic arrays (PLAs), microcode read only memories (ROMs), etc. In one example, the core 690 includes a microcode ROM (not shown) or other medium that stores microcode for certain macroinstructions (e.g., in decode circuitry 640 or otherwise within the front-end circuitry 630). In one example, the decode circuitry 640 includes a micro-operation (micro-op) or operation cache (not shown) to hold/cache decoded operations, micro-tags, or micro-operations generated during the decode or other stages of the processor pipeline 600. The decode circuitry 640 may be coupled to rename/allocator unit circuitry 652 in the execution engine circuitry 650.

The execution engine circuitry 650 includes the rename/allocator unit circuitry 652 coupled to retirement unit circuitry 654 and a set of one or more scheduler(s) circuitry 656. The scheduler(s) circuitry 656 represents any number of different schedulers, including reservations stations, central instruction window, etc. In some examples, the scheduler(s) circuitry 656 can include arithmetic logic unit (ALU) scheduler/scheduling circuitry, ALU queues, address generation unit (AGU) scheduler/scheduling circuitry, AGU queues, etc. The scheduler(s) circuitry 656 is coupled to the physical register file(s) circuitry 658. Each of the physical register file(s) circuitry 658 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 658 includes vector registers unit circuitry, writemask registers unit circuitry, and scalar register unit circuitry. These register units may provide architectural vector registers, vector mask registers, general-purpose registers, etc. The physical register file(s) circuitry 658 is coupled to the retirement unit circuitry 654 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 654 and the physical register file(s) circuitry 658 are coupled to the execution cluster(s) 660. The execution cluster(s) 660 includes a set of one or more execution unit(s) circuitry 662 and a set of one or more memory access circuitry 664. The execution unit(s) circuitry 662 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 656, physical register file(s) circuitry 658, and execution cluster(s) 660 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 664). It should also be understood that where separate pipelines are used, one or more of these pipelines may be out-of-order issue/execution and the rest in-order.

In some examples, the execution engine unit circuitry 650 may perform load store unit (LSU) address/data pipelining to an Advanced Microcontroller Bus (AMB) interface (not shown), and address phase and writeback, data phase load, store, and branches.

The set of memory access circuitry 664 is coupled to the memory unit circuitry 670, which includes data TLB circuitry 672 coupled to data cache circuitry 674 coupled to level 2 (L2) cache circuitry 676. In one example, the memory access circuitry 664 may include load unit circuitry, store address unit circuitry, and store data unit circuitry, each of which is coupled to the data TLB circuitry 672 in the memory unit circuitry 670. The instruction cache circuitry 634 is further coupled to the level 2 (L2) cache circuitry 676 in the memory unit circuitry 670. In one example, the instruction cache 634 and the data cache 674 are combined into a single instruction and data cache (not shown) in L2 cache circuitry 676, level 3 (L3) cache circuitry (not shown), and/or main memory. The L2 cache circuitry 676 is coupled to one or more other levels of cache and eventually to a main memory.

The core 690 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 690 includes logic to support a packed data instruction set architecture extension (e.g., AVX1, AVX2), thereby allowing the operations used by many multimedia applications to be performed using packed data.

### Example Execution Unit(s) Circuitry.

FIG. 7 illustrates examples of execution unit(s) circuitry, such as execution unit(s) circuitry 662 of FIG. 6B. As illustrated, execution unit(s) circuity 662 may include one or more ALU circuits 701, optional vector/single instruction multiple data (SIMD) circuits 703, load/store circuits 705, branch/jump circuits 707, and/or Floating-point unit (FPU) circuits 709. ALU circuits 701 perform integer arithmetic and/or Boolean operations. Vector/SIMD circuits 703 perform vector/SIMD operations on packed data (such as SIMD/vector registers). Load/store circuits 705 execute load and store instructions to load data from memory into registers or store from registers to memory. Load/store circuits 705 may also generate addresses. Branch/jump circuits 707 cause a branch or jump to a memory address depending on the instruction. FPU circuits 709 perform floating-point arithmetic. The width of the execution unit(s) circuitry 662 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors, and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

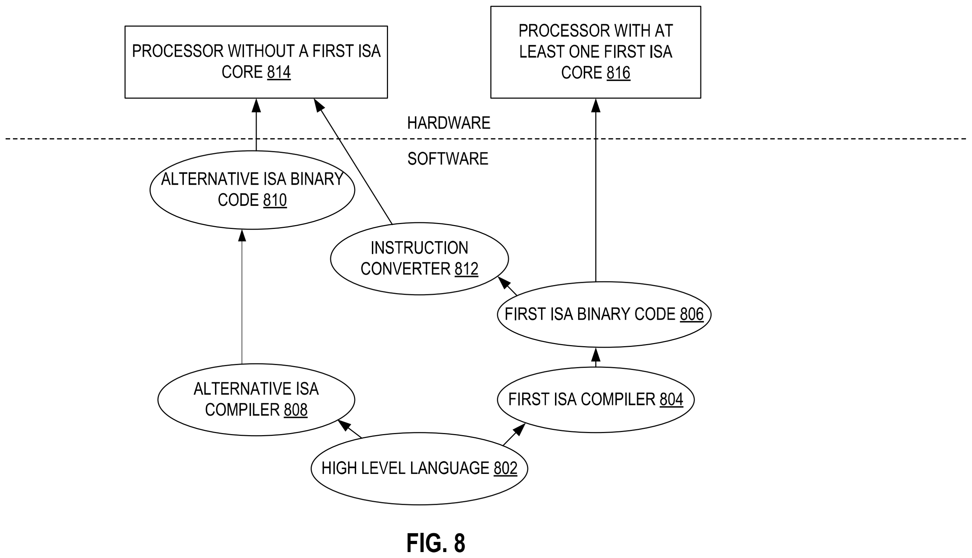

FIG. 8 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 8 shows a program in a high-level language 802 may be compiled using a first ISA compiler 804 to generate first ISA binary code 806 that may be natively executed by a processor with at least one first ISA core 816. The processor with at least one first ISA core 816 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 804 represents a compiler that is operable to generate first ISA binary code 806 (e.g., object code) that can, with or without additional linkage processing, be executed on the processor with at least one first ISA core 816. Similarly, FIG. 8 shows the program in the high-level language 802 may be compiled using an alternative ISA compiler 808 to generate alternative ISA binary code 810 that may be natively executed by a processor without a first ISA core 814. The instruction converter 812 is used to convert the first ISA binary code 806 into code that may be natively executed by the processor without a first ISA core 814. This converted code is not necessarily to be the same as the alternative ISA binary code 810; however, the converted code will accomplish the general operation and be made up of instructions from the alternative ISA. Thus, the instruction converter 812 represents software, firmware, hardware, or a combination thereof that, through emulation, simulation, or any other process, allows a processor or other electronic device that does not have a first ISA processor or core to execute the first ISA binary code 806.

References to "one example," "an example," "one embodiment," "an embodiment," etc., indicate that the example or embodiment described may include a particular feature, structure, or characteristic, but every example or embodiment may not necessarily include the particular feature, structure, or characteristic. Moreover, such phrases do not necessarily refer to the same example or embodiment. Further, when a particular feature, structure, or characteristic is described in connection with an example or embodiment, it is submitted that it is within the knowledge of one skilled in the art to affect such feature, structure, or characteristic in connection with other examples or embodiments whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e., A and B, A and C, B and C, and A, B and C). As used in this specification and the claims and unless otherwise specified, the use of the ordinal adjectives "first," "second," "third," etc. to describe an element merely indicates that a particular instance of an element or different instances of like elements are being referred to and is not intended to imply that the elements so described must be in a particular sequence, either temporally, spatially, in ranking, or in any other manner. Also, as used in descriptions of embodiments, a "/" character between terms may mean that what is described may include or be implemented using, with, and/or according to the first term and/or the second term (and/or any other additional terms).

Also, the terms "bit," "flag," "field," "entry," "indicator," etc., may be used to describe any type or content of a storage location in a register, table, database, or other data structure, whether implemented in hardware or software, but are not meant to limit embodiments to any particular type of storage location or number of bits or other elements within any particular storage location. For example, the term "bit" may be used to refer to a bit position within a register and/or data stored or to be stored in that bit position. The term "clear" may be used to indicate storing or otherwise causing the logical value of zero to be stored in a storage location, and the term "set" may be used to indicate storing or otherwise causing the logical value of one, all ones, or some other specified value to be stored in a storage location; however, these terms are not meant to limit embodiments to any particular logical convention, as any logical convention may be used within embodiments.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
instruction decoder circuitry to decode a first instruction, the first instruction to reference a memory location via a tagged pointer; and
execution circuitry coupled to the instruction decoder circuitry, the execution circuitry to perform one or more memory tag checking operations in response to the first instruction, wherein:
the one or more memory tag check operations include referencing an entry location to find a first tag value and comparing the first tag value to a second tag value provided by the tagged pointer; and
the entry location is to be in a first subregion of a memory region to be reserved for a tag table, the first subregion is to be in a first set of subregions of the memory region, the first set is to include only subregions committed to tag storage, the memory region to be reserved for the tag table is also to include a second set of subregions, and the second set is to include only subregions uncommitted to tag storage.

2. The apparatus of claim 1, wherein the first set is to be enlarged on demand as memory tags are initialized.

3. The apparatus of claim 1 or 2, wherein the one or more memory tagging checking operations also include causing an exception in response to a mismatch between the first tag value and the second tag value.

4. The apparatus of any of claims 1-3, wherein the memory location is to be referenced with a linear address in a linear address space, wherein optionally the linear address is to be used to find the first tag value.

5. The apparatus of claim 4, wherein the first subregion is to be a page in linear memory, wherein optionally the page has a size of 4K bytes.

6. The apparatus of claim 5, wherein to find the first tag value includes calculating a scaled address by dividing by a first number a distance of the linear address from a lowest address in the linear address space, the first number to be based on a size of the memory location, and a size of the first tag value.

7. The apparatus of claim 6, wherein the size of the memory location is 16 bytes, wherein optionally the size of the first tag value is four bits.

8. The apparatus of claim 7, wherein the first number is 32, wherein optionally the first subregion includes tag storage space to cover 32 data pages.

9. The apparatus of claim 8, wherein the linear address space has a first size and the memory region to be reserved for the tag table has a second size, wherein the second size is the first size divided by 128K.

10. The apparatus of claim 9, further comprising a register to store a base address of the tag table, wherein optionally to find the first tag value also includes adding the scaled address to the base address.

11. The apparatus of claim 10, wherein the linear address is in a first linear address space of a plurality of linear address spaces and the memory region to be reserved for the tag table is in the first linear address space of a plurality of linear address spaces.

12. A method comprising:
decoding a first instruction, the first instruction to reference a memory location via a tagged pointer; and
performing one or more memory tag checking operations in response to the first instruction, wherein:
the one or more memory tag check operations include referencing an entry location to find a first tag value and comparing the first tag value to a second tag value provided by the tagged pointer; and
the entry location is to be in a first subregion of a memory region to be reserved for a tag table, the first subregion is to be in a first set of subregions of the memory region, the first set is to include only subregions committed to tag storage, the memory region to be reserved for the tag table is also to include a second set of subregions, and the second set is to include only subregions uncommitted to tag storage.

13. The method of claim 12, further comprising enlarging the first set on demand as memory tags are initialized.

14. A non-transitory machine-readable medium storing instructions, including a first instruction which, when decoded by a machine, causes the machine to perform a method comprising:
referencing an entry location to find a first tag value the first instruction to reference a memory location via a tagged pointer; and
comparing the first tag value to a second tag value provided by a tagged pointer; wherein:
the first instruction references a memory location via the tagged pointer; and
the entry location is to be in a first subregion of a memory region to be reserved for a tag table, the first subregion is to be in a first set of subregions of the memory region, the first set is to include only subregions committed to tag storage, the memory region to be reserved for the tag table is also to include a second set of subregions, and the second set is to include only subregions uncommitted to tag storage.

15. The non-transitory machine-readable medium of claim 14, wherein the method further comprises enlarging the first set on demand as memory tags are initialized.
